# EUROPÄISCHE PATENTSCHRIFT

(11) **EP 2 850 273 B1**
(45) Veröffentlichungstag und Bekanntmachung des Hinweises auf die Patenterteilung: **09.11.2016**
(21) Anmeldenummer: 13732252.5
(22) Anmeldetag: 14.05.2013
(51) Int. Cl.: E06B 7/10, F24F 12/00

(54) **IM EINBAUZUSTAND REVISIONIBLES GERAET ZUM LUEFTEN UND ZUM ERHALT EINER REGULAEREN VERGLASUNGSABMESSUNG ALS VERFAHREN UND VORRICHTUNG**
VENTILATION DEVICE WHICH CAN BE SERVICED WHEN INSTALLED AND WHICH ALLOWS CONVENTIONAL GLAZING DIMENSIONS TO BE MAINTAINED, AND CORRESPONDING METHOD AND APPARATUS
APPAREIL POUVANT ÊTRE FACILEMENT RÉVISÉ UNE FOIS MONTÉ, SERVANT À LA VENTILATION ET PERMETTANT DE CONSERVER LES DIMENSIONS NORMALES D'UN VITRAGE

(30) Priorität: 14.05.2012 DE 102012104199; 16.05.2012 DE 102012104295; 11.07.2012 DE 102012106253
(43) Veröffentlichungstag der Anmeldung: 25.03.2015
(73) Patentinhaber: Hautau GmbH, 31691 Helpsen (DE)
(72) Erfinder: WUESTEFELD, Wolfgang, 30974 Wennigsen (DE); FAATZ, Stefan, 32549 Bad Oeynhausen (DE)
(74) Vertreter: Dantz, Jan Henning
(86) Internationale Anmeldenummer: PCT/IB2013/053935
(87) Internationale Veröffentlichungsnummer: WO 2013/171676

(56) Entgegenhaltungen:
- EP-A2- 2 375 180
- EP-B1- 1 690 045
- DE-U1-202011 104 662

## Beschreibung

Die Erfindung betrifft ein Rahmenlüftungsgerät und ein Verfahren, mit dem eine Reihe von Schwierigkeiten behoben werden, die im Stand der Technik angelegt sind. Das Rahmen- Lüftungsgerät (RLG) besitzt ein Gehäuse mit zumindest einem ersten und einem zweiten Lüfter und zwei Öffnungen für ein Ausströmen und zwei Öffnungen für ein Einströmen von Luft, um einen Luftaustausch - im Grunde eine Zirkulation - zu ermöglichen, zwischen einem freien Außenraum (mit Wetterabhängigkeit) und einem geschlossenen, oder weitgehend geschlossenen Innenraum (mit klimatisierter, weitgehend konstanter Temperatur).

Aufgaben, die früher durch Öffnen des Fensters vorgenommen wurden oder über eine separate Lüftungseinrichtung mit Lüftungsröhren für Luft und Austrittsöffnungen im Raum und zentralen Klimatisierungsgeräten, werden zunehmend in den Bereich des Fensters oder der Fenstertür oder der Tür in einem Raum verlagert, und dabei so platziert, dass das Mauerwerk oder die Wand wenig verändert werden soll. Es wird dabei das Fensterprofil verwendet und dabei insbesondere der Festrahmen, in den ein Lüftungsgerät eingebaut wird. Es ergeben sich eine Ausströmöffnung für Innen und Außen, und es gibt eine Vielzahl von Varianten, die ausströmende Luft aus dem Raum und die einströmende Luft in den Raum relativ zueinander zu führen, um einen Feuchtigkeitsaustausch oder einen Wärmeaustausch (zur Energieerhaltung) zu ermöglichen. Auch intermittierende Strömungsrichtungen der Luft im gleichen Kanal sind möglich, eine Zeit lang nach außen und eine Zeit lang nach innen, auf dem gleichen Strömungsweg.

Oft ist es so, dass eine Vergrößerung des Festrahmens den bewegbaren Flügel in der Größe reduziert, so dass das Fenster, also die Lichtöffnung des Fensters, der Türe oder der Fenstertür verkleinert wird. Oft ist es auch so, dass unterhalb des Rahmens das Mauerwerk aufgeschlagen wird, um dort ein Lüftungsgerät zu platzieren. Soll das vermieden werden, kann das Lüftungsgerät auch unter dem oberen Rand der Fensteröffnung (in der Mauer) platziert werden. Dann wird allerdings ein flächenmäßig kleineres Fenster zu platzieren sein, welches erneut die Lichtfläche des Fensters, der Fenstertür oder der verglasten Tür reduziert.

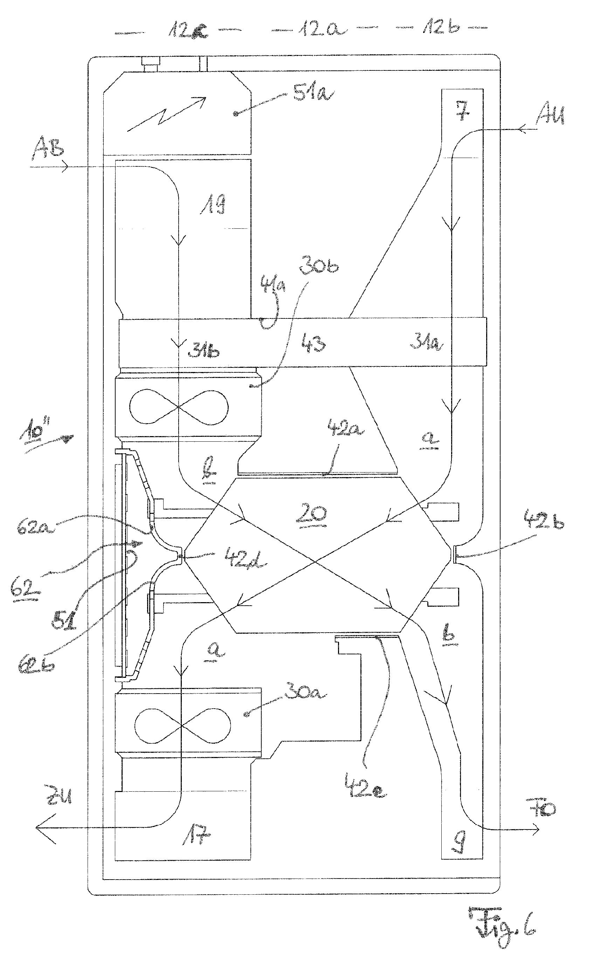

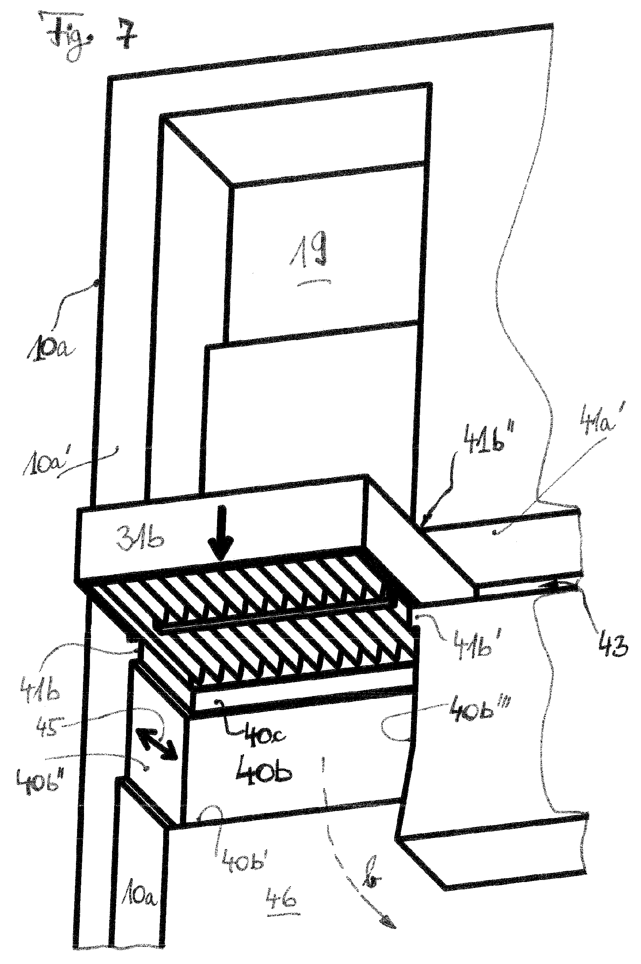

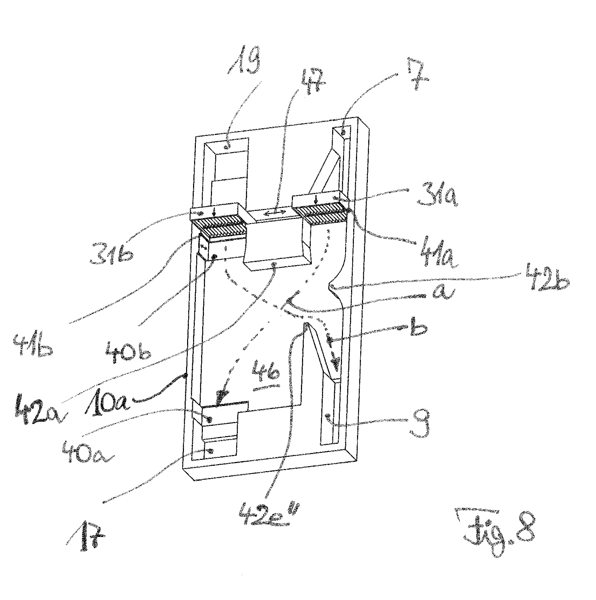

Mit der DE 20 2011 104 662 U1 (Lunos) ist eine Lüftungsanordnung bekannt geworden, die als "Einbauprofil" beschrieben wird. Dieses lüftende Einbauprofil eignet sich zum Anbau an ein Wandsystem in einer Gebäudewand. Kern und Herzstück dieses langgestreckten, vierkant-profilierten Gebildes als Einbauprofil ist ein Wärmetauschermaterial (dort 230, Seite 5, Absätze [044], [045]), durch das abwechselnd Luft in beiden Richtungen von gesteuerten Lüftern bewegt wird, welche Luft an Ausström-/Einströmöffnungen ausströmt/einströmt. Die Öffnungen sind gegeneinander gerichtet, nach außen und nach innen, mit Blick auf die Wand, in die das Lüftungsgerät eingebaut ist. Besonders die dortige Fig. 6 zeigt den Einbau nahe eines Rahmens, besser gesprochen unterhalb eines Rahmens eines Flügels, dort Absatz [056], [057]. Hierbei wird ein Adapterprofil unter das Fenster gesetzt, so dass schlussfolgernd das Fenster etwas kleiner werden wird. In den Fensterrahmen platzieren die dortigen Figuren 7, 8 das Einbauprofil, jeweils horizontal, und in den Fensterrahmen nach der dortigen Figur 9 und dem dortigen Absatz [060] wird das Einbauprofil mit dem Lüfter in den vertikalen Rahmen (den Flügelrahmen) platziert.

Die WO2011/105969 offenbart ein Lüftungsgerät für ein Fenster, das an dem Rahmen montiert ist. Das Lüftungsgerät weist an der Außenseite und der Innenseite Strömungsöffnungen auf, um Luft über einen Wärmetauscher von außen nach innen und von innen nach außen im Gegenstrom strömen zu lassen.

In der EP 1 690 045 wird eine Lüftungsvorrichtung für ein Fenster offenbart, die unter einer Fensterbank angeordnet ist. Über zwei Lüfter wird von außen und innen Luft angesaugt und über einen Wärmetauscher geleitet.

Die beanspruchte Erfindung wendet sich von diesen Vorschlägen ab.

Die hier vorgestellte Erfindung, die naturgemäß auch beansprucht ist, soll das Fenster (die Fenstertür oder die verglaste Tür) nicht verändern. Der Rahmen soll gleich bleiben, der Flügel (der bewegbare Flügel, relativ zum Rahmen) soll ebenfalls erhalten bleiben und damit soll die Lichtöffnung, die durch Glas verschlossen ist, nicht reduziert werden. Gleichzeitig soll das Lüftungsgerät aber verdeckt arbeiten und nicht gesondert hervorstehen, zumindest nicht evident ersichtlich.

Besonders in dieser Einbaulage ist die Notwendigkeit gegeben, die elektrisch betriebenen Komponenten und auch den Wärmetauscher innerhalb des Rahmen-Lüftungsgeräts austauschen zu können, und dies im eingebauten Zustand des Lüftungsgeräts. Das Gerät ist aber dennoch klein zu halten, also übermäßige Räume sind zu vermeiden, die zur Wartung zusätzliche Möglichkeiten geben könnten, damit der Raum gering wird, der aus der Laibung auszunehmen ist, um das Lüftungsgerät verdeckt und eingesetzt neben dem Blendrahmen in der Laibung platzieren zu können.

Die Revisionsfähigkeit (Wartungsfähigkeit) ist also trotz eines verdeckten Einbaus gefordert, als Gesamtproblemstellung und gesuchtes Leistungsergebnis der beanspruchten Erfindungen.

Das Rahmen-Lüftungsgerät soll ebenso für alle verfügbaren Arten von Rahmen einsetzbar sein (Holz, Metall, Kunststoff) und sich automatisch an eine jeweilige Eigenart der verwendeten Rahmenart anpassen und dennoch "kompakt" in seinen Außenmaßen ausfallen.

Die beanspruchte Erfindung gemäß Anspruch 1 löst diese Aufgabe.

Wird die abnehmbare Platte (Anspruch 1, letztes Merkmal) abgenommen, ist Zugriff auf das Innenleben des Lüftungsgeräts, auch im Einbauzustand, gegeben.

Zugriff ist ein austauschender oder revisionierender Griff auf zumindest einen von zwei elektromotorisch betriebenen Ventilatoren (kurz: Lüfter), einen von zwei Filtern, den Wärmetauscher und/oder eine Steuerplatine (elektrisch oder elektronisch) und/oder ein Netzteil (für die Steuerplatine und die Lüfter).

Bevorzugt sind beide Lüfter austauschbar gehalten und sind nach dem Öffnen der abnehmbaren Platte, welche die Revisionsöffnung abdeckt, direkt zugänglich. Die bevorzugte Form der Lüfter sind Axiallüfter, die sich für das Einschieben und das Platzieren eignen und auch ausreichend Luft-Fördervolumen zu Verfügung stellen können.

Sind zwei Strömungskanäle vorhanden, verlaufen beide durch den Wärmetauscher, bleiben aber eigenständig. Im Zuge jedes Strömungskanals ist einer der beiden Lüfter angeordnet (Anspruch 1, erster Merkmal). Bevorzugte Platzierungen dieser, bevorzugt als Axiallüfter gestalteten Ventilatoren sind so, dass beide Lüfter unter der abnehmbaren Platte angeordnet sind. Sie liegen damit im funktionell gesehenen Innenstreifen. Im eingebauten Zustand ist der Montagestreifen verdeckt und von dem Blendrahmen mit seiner Außenfläche eingenommen, sodass der Zugriff zum Inneren des Geräts nur über maximal die Größe des Innenstreifens erfolgen kann, und dabei begrenzt oder beschränkt über die Größe der abnehmbaren Platte, die kleiner sein kann, als der Innenstreifen. Die Platte selbst kann geometrisch so geformt sein, das sie kürzer ist als der Innenstreifen, wenn ein oder zwei Lüftungsöffnungen auch hier enden.

Die Komponenten, welche oben erwähnt sind, sind die für den Betrieb des Lüftungsgeräts benötigten Komponenten. Der Wärmetauscher ist als wesentliches zentrales Element austauschbar zu platzieren. Beide Lüfter sind bevorzugt dann unmittelbar austauschbar, wenn sie direkt unter der abnehmbaren Platte angeordnet sind, jeder in seinem Strömungskanal. Beide Filter, sind ebenfalls entnehmbar, liegen aber vorteilhaft nicht beide neben dem jeweiligen, einem Strömungskanal zugehörigen Lüfter, zu dem auch die Filter gehören, sondern liegen an anderer Stelle.

Sie erfüllen dabei die Kriterien vor dem Strömungseintritt in den Wärmetauscher zu liegen und stromauf vor einen jeweiligen Lüfter. Damit saugt der jeweilige Lüfter durch den jeweiligen Filter die Luft an, und der jeweilige Filter sorgt dafür, dass die in den Wärmetauscher geförderte Luft zuvor gefiltert worden ist.

Dabei ergibt sich als vorteilhafte Gestaltung, dass beide Lüfter im vorderen Bereich des Lüftungsgeräts angeordnet sind, jeder in einem Strömungskanal. Die Lüfter sitzen dabei in Führungen, die es dem Benutzer erlauben, die Filter vertikal (relativ zur Flachseite) herauszunehmen und einen Filter längs eines Kanals zu verschieben, bis er - unter dem Montagestreifen hindurchgeschoben - in den außenliegenden Streifen gelangt ist und dort seinen Platz in dem zweiten Lüftungskanal einnimmt.

Damit liegen beide Filtereinsätze im Anfangsbereich ihres jeweiligen Strömungskanals. Einer davon ist unmittelbar zugänglich (nach Abnehmen der abnehmbaren Platte) und einer erst durch ein Verschieben innerhalb eines Schubkanals. Der Filter lässt sich im montierten Zustand des Lüftungsgeräts zumindest bereichsweise unter den Außenstreifen bewegen, und aus dieser Einbaulage auch wieder hervorholen.

Eine weitere Komponente ist das Netzteil. Es kann an verschiedenen Stellen platziert sein. So unmittelbar unter dem abnehmbaren Deckel zusammen mit einer Steuerplatine, welche die Elektrik/Elektronik beherbergt, und die vertikal nach Art einer Steckführung eingeschoben ist. Oder das Netzteil ist unter dem Montagestreifen platziert, mit zumindest mehr als der Hälfte seines flächigen Ausmaßes, und sitzt dabei bevorzugt in einer Tasche oder an anderen Plätzen.

Die Tasche ist zum Deckel hin (seitlich) geöffnet, sodass nach Öffnen der abnehmbaren Platte zumindest ein Abschnitt des Netzteils ergriffen und es aus der Tasche herausgezogen werden kann.

Umgekehrt wird es beim Einschieben in die Tasche an zumindest zwei vertikalen Wandabschnitten geführt, wobei zu den Führungen der Wandabschnitte auch Anschläge zählen, die eine Führungs/Haltefunktion am Ende des Einschubweges ausüben.

Eine vorteilhafte Gestaltung der Platzierung des Netzteiles ist so, dass es nach seinem Einschieben eine eigenständige Führung zur Verfügung stellt, die wegfällt, wenn das Netzteil herausgenommen ist. Die Tasche ist insoweit in Längsrichtung zu einer Seite offen (bevorzugt "nach oben" im Sinne des Einbauzustands des Lüftungsgeräts, oder nicht relativ gesehen, zur Mitte hin), und die hier platzierte Wand des Netzteils bildet eine Führung für den eingeschobenen Wärmetauscher. Bei einer bestimmten Orientierung des Wärmetauschers kann dieser schwer aus dem eingebauten Gerät und insbesondere schwer unter dem Montagestreifen herausgeholt werden. Er muss dazu im Gehäuse des Lüftungsgeräts gedreht werden, wenn seine Querabmessung größer ist als seine Längsabmessung (in Querrichtung des Lüftungsgeräts betrachtet), sodass es von Vorteil ist, wenn eine der seitlichen Führungen wegfällt, nachdem das Netzteil herausgenommen wurde. Dann befähigt der Wegfall dieser Führung den Benutzer, den Wärmetauscher in seiner eingeschobenen Lage zu drehen und mit der Drehbewegung wechselt die Längs/Querrichtung ihre Platzierung.

Der Wärmetauscher erhält so eine Lage, bei der seine schmälere Erstreckung in Querrichtung (des Lüftungsgeräts) orientiert ist, und er kann dann um seine längere Mittelachse aufwärts aus seiner Platzierung herausgeschwenkt werden, um ihn zu entnehmen.

Das Herausnehmen geschieht aus der und durch die - von der abgenommenen Platte geöffnete(n) - Revisionsöffnung im dritten Funktionsstreifen, und der Wärmetauscher windet sich dabei unter dem Montagestreifen (seiner Platzierung oder Übergangslage unterhalb des Montagestreifens) heraus oder hervor, auch unterstützt durch seine eigene, inhärente Elastizität, die eine geringe Biegung auf der Gesamtfläche des Wärmetauschers erlaubt.

Bei einer anderen regulären Betriebsposition, bei der ohnehin die längere Erstreckung des Wärmetauschers in Längsrichtung des Geräts platziert ist, braucht die eine vertikale Führung nicht wegzufallen, weil der Wärmetauscher Kraft seiner Betriebslage auch aus der und durch die Revisionsöffnung im dritten Funktionsstreifen herausgeschwenkt werden kann, auch unterstützt von seiner Eigenelastizität.

Von besonderer Beachtung ist hierbei, da die Revisionsöffnung nicht so groß sein kann, dass der flächig relativ große Wärmetauscher ohne diese leichte Aufwärts-Schwenkbewegung herausgenommen werden kann. In absoluten Maßen ist die Revisionsöffnung in Querrichtung also kleiner, als die Erstreckung des Wärmetauschers in dieser Richtung (in der Einbaulage in einem Fall) oder in der nach Wegfall der führenden Wand gedrehten Einbaulage, in der er sich auf seinem Weg zum Herausnehmen befindet.

Der mehrfach verwendete Begriff der Führungen innerhalb des Gerätes soll erläutert werden. Die Führungen werden bei geöffneter Platte benötigt, nachdem die Revisionsöffnung freigelegt worden ist. Ein Führen ist so zu verstehen, dass damit die Komponenten des Lüftungsgeräts, die oben mehrfach erwähnt wurden, eingesetzt und eingeschoben werden können. Führungen halten die Komponenten in ihrer Betriebslage, sie erlauben ihre Verschiebebewegung an den Ort, an dem sie betrieblich vorgesehen sind, und sie umfassen auch Anschläge, die jene betrieblichen Komponenten halten, wenn sie in ihrer eingesetzten, betrieblichen Position angelangt sind. Der technische Begriff der "Führung" ist dabei in diesem umschriebenen Sinne zu verstehen. Konkret werden dazu strukturelle Wände verwendet oder Wandabschnitte, die fest eingebaut sein können oder sogar entnehmbar sind, wie es anhand des herausnehmbaren Netzteils erläutert war.

Die für die Führung verwendeten Wände müssen nicht vollständig die Höhe des Innenraums des Lüftungsgeräts einnehmen. Sie können auch nur einen Abschnitt davon einnehmen und können gestuft sein, sodass nur ein vertikaler Abschnitt dieser Wand die tatsächliche Führung der Komponente übernimmt, die eingelegt und an ihren betrieblichen Platz verschoben wird. Beispiele für solche Führungen, auch im Sinne von Anschlägen, sind Kanten, Stege, Wände oder Wandabschnitte, wie auch Vertiefungen im Boden des Lüftungsgeräts, die eine vertikal eingeschobene Komponente dort in ihrer betrieblichen Lage fixiert halten.

Eine abschließende Entnahmebewegung jeder der Komponenten hat mehr oder weniger vollständig eine vertikale Richtung zum Gegenstand. Diese senkrechte oder vertikale Richtung bemisst sich gegenüber der Flachseite des Lüftungsgeräts, oder im eingebauten Zustand verläuft sie parallel zur Fensterebene. Einige der Komponenten werden unmittelbar vertikal herausgezogen, andere Komponenten werden erst intern längs des Innenraums an Führungen verschoben, um sie danach vertikal herauszuziehen, und wieder andere Komponenten werden zunächst im Innenraum verschwenkt, um sie anschließend durch die Revisionsöffnung herauszunehmen und dabei auch eine Verkippbewegung entstehen zu lassen, auch unterstützt von einer Eigenelastizität der Komponente.

Alle Führungen befinden sich demzufolge im Innenraum des Gehäuses und dabei werden die vertikalen Führungen oft mit Blick auf die eingeschobenen Komponenten auch "laterale Führungen" genannt.

Besondere Formen von Führungen können auch Ecken von Wänden sein, beispielsweise so, dass ein Schubkanal für einen der Filter gebildet wird und der Beginn der Wand mit einer sich vertikal erstreckenden Kante eine Führungsaufgabe für einen später eingesetzten Filter bildet, nachdem der erste Filter entlang des Schubkanals in Querrichtung verschoben wurde.

In besonderer Ausgestaltung können Führungen auch strömungsdicht sein, wenn sie am Wärmetauscher ansetzen, oder der Wärmetauscher an diesen Führungen anschlägt.

Das ist beispielweise dann der Fall, wenn diese Führung eine strömungsdichte Abdichtung von zwei an dieser Stelle nahezu zusammenlaufenden Strömungskanälen bildet, und der Wärmetauscher mit einem Abschnitt seines Randes hier eine strömungsdichte Abdichtung bewirkt, sodass die Kanäle strömungsmäßig getrennt bleiben, obwohl sie gemeinsam durch den Wärmetauscher verlaufen, dort aber auf verschiedenen Ebenen geführt werden, die strömungsmäßig voneinander getrennt sind.

Durch diese Einschubtechnik lassen sich alle betrieblichen Komponenten des Lüftungsgeräts zu Wartungszwecken oder zum Austauschen auf einfache Weise entnehmen (und auch wieder einsetzen).

Das Entnehmen fast aller Komponenten geschieht anfangs quer zur Fensterebene, in einer Richtung parallel zur Flachseite des Geräts, welche die drei funktionellen Streifen aufweist. Dies auch für den Wärmetauscher, der zusätzlich die leichte Aufwärts-Verkippbewegung erfahren kann. Einer der Filter wird zunächst in Querrichtung unter dem Außenstreifen hervorgezogen, um dann in Richtung der Fensterebene aus dem Gerät herausgenommen zu werden. Ebenso ein Netzteil, das unter dem Montagestreifen hervorgezogen werden kann, bevor es parallel zur Fensterebene (quer oder senkrecht zur Flachseite) herausgenommen wird. Die steuernde Platine und auch der andere Filter können direkt aus ihrer Steckführung bzw. Führung senkrecht zur genannten Flachseite herausgezogen werden (parallel zur Fensterebene).

Beide Lüfter (Ventilatoren) können direkt aus ihren Führungen in einer Richtung parallel zur Fensterebene herausgenommen werden. So auch der eine Filtereinsatz. Auch er ist in einer Führung gehalten und kann auf einfache Weise heraus genommen werden.

Die elektrische (oder elektronische) Ansteuerplatine betreibt die Lüfter (z.B. mit einer Drehzahlregelung). Auch sie sitzt in einer Führung und Halterung, die ein direktes Herausziehen möglich macht.

Auch das Netzteil wird so entnommen, wenn es betrieblich unter dem Montagestreifen in der Tasche sitzt. Das Netzteil kann indes auch an einer anderen Stelle im Gehäuse seinen Platz finden.

Ein jeweiliges erneutes Einsetzen (nach Reinigung oder Reparatur oder Ersatz) erfolgt invertiert zum Bewegungsablauf beim Herausnehmen.

Der im Wesentlichen im Zentrum des Gehäuses befindliche, in Bezug zu den anderen Komponenten relativ große Wärmetauscher kann durch seitliches Verschieben und Herausschwenken aus dem Gehäuse ausgebaut werden, gewartet werden und wieder, in Rückwärtsrichtung betrachtet, eingesetzt werden. Dies obschon das ganze Gerät eigentlich verdeckt in der Mauer und hinter dem Blendrahmen eingebaut ist. Der Wärmetauscher wird dazu durch Führungen gehalten, die es ihm erlauben, herausgeschoben zu werden.

Eine Verlegung in die Mauer (Laibung) wird vom beanspruchten Rahmen-Lüftungsgerät vorgeschlagen, aber es wird nicht in Richtung der Ebene des Fensters an den Rahmen angelegt, sondern senkrecht zu dieser Fensterebene, die durch den Rahmen und den geschlossenen Flügel abgebildet wird.

Senkrecht zu dieser Ebene erstreckt sich die eine Haupt-Erstreckungsrichtung des Rahmen- Lüftungsgeräts. Auch wenn es als Rahmen-Lüftungsgerät benannt wird, ist es nicht in den Rahmen eingebaut, sondern an den Rahmen (von außerhalb des Rahmens) angelegt oder angefügt (angedockt), insbesondere auch zusätzlich daran mechanisch befestigt, wozu das Rahmen-Lüftungsgerät zumindest einen Streifenbereich besitzt, der an der nach außen weisenden Stirnfläche des (äußeren) Rahmens des Fensters, der Fenstertür oder der Tür anliegt. Dadurch ergibt sich die erwähnte Verlagerung an die Seite und in die Mauer (Laibung) des zu montierenden Fensters.

Die seitliche Verlagerung und das Herausreichen nach außen (Außenraum) ist hier von Vorteil, weil der Abfluss von beim Wärmetausch entstehendem Kondenswasser auf der Außenseite des Gebäudes so gelegt ist, dass ein entweder vorhandenes oder zusätzlich angebautes Hohlprofil (auf der Außenseite) das entstehende Wasser (Kondenswasser) so führen kann, dass es auf dem Sims (außen) auflaufen oder abtropfen kann. Eine gesonderte Bahnführung und eine gesonderte Beachtung, wo dieses Kondenswasser entsteht, braucht dadurch nicht zu erfolgen. Die Entwässerung des Kondensats erfolgt auf die Fensterbank, ein zusätzliches Leistungsergebnis oder - anders gesprochen - eine zu lösende technische Aufgabe ist erfüllt.

Aufgrund der Konstruktion und des Aufbaus des Rahmen-Lüftungsgeräts ist es nachrüstfähig.

Es ist nicht direkt aus der Fassade austretend (vorstehend), sondern gegenüber der Fassadenfläche (außen) nach Innen verlagert, so dass die optische Außenansicht der Fassade nicht durch Wasserablauf, Schmutzablauf oder "Rotznasen", die sich durch laufend und langfristig ablaufendes schmutziges Wasser ergeben, geschädigt oder in ihrem Ansehen beeinträchtigt wird.

Die Raum-Zuluft und die Raum-Abluft (richtungsorientiert gesehen) werden seitlich an dem Blendrahmen (dem Festrahmen) vorbei geleitet (zugeführt oder abgeführt). Sie werden durch die Fensterwand geleitet, wobei eine Ausnehmung in der Wand (auch: Laibung) von dem Rahmen-Lüftungsgerät, das mit einem Streifenbereich (dem Montagestreifen) an der Außenseite des Festrahmens andockend anliegt, eingenommen ist.

Erfolgt die Luftführung seitlich durch das Lüftungsgerät und somit seitlich am Blendrahmen vorbei, wird das Fenster in keiner Weise verändert, weder in der Größe, noch beim Umbau, noch beim Anbau an Oberflächen von Rahmen, Blendrahmen oder Flügelrahmen.

Das beanspruchte Lüftungsgerät hat eine Flachseite, die funktionell dreigeteilt ist. Die Zahl "drei" ist eine Mindestzahl und soll zu verstehen geben, dass zumindest drei Streifenabschnitte funktionell vorgesehen sind (Anspruch 1, mittleres Merkmal).

Ein erster Streifenabschnitt ist so ausgebildet, dass er als Montagestreifen an der seitlichen Stirnfläche des Fensterrahmens angedockt werden kann. Er ist dazu in Längsrichtung durchgehend, vertikal betrachtet, im montierten Zustand und liegt in der Haupterstreckungsrichtung des Lüftungsgeräts. Er kann zum Montieren Aufnahmen oder Vorsprünge aufweisen, die entsprechende Gegenstücke am Festrahmen haben (dessen seitliche äußere, vertikal orientierte Stirnfläche).

Beiderseits des ersten genannten Funktionsstreifens sind zwei weitere (vertikale) Funktionsstreifen vorgesehen, die sich auch über die Gesamtlänge des Lüftungsgeräts, respektive der Flachseite erstrecken können. Eine davon wird Innenstreifen und eine davon wird Außenstreifen benannt, nach ihrer sinngemäßen Orientierung im montierten Zustand.

Der innere Streifen als Innenstreifen ist ein Funktionsstreifen, dem der Revisionszugang (die Revisionsöffnung) zugeordnet ist.

Der Außenstreifen weist zwei Strömungsöffnungen auf. Diese sind Ausgangspunkt oder Endpunkt, je nach Strömungsrichtung, von zwei in dem Rahmen-Lüftungsgerät vorgesehenen Strömungskanälen. Es sind nicht die gleichen Strömungskanäle, sondern die zwei Strömungskanäle in dem Lüftungsgerät sind so ausgebildet, dass sie beide über einen (oder: durch einen) Wärmetauscher verlaufen.

Jedem der Strömungskanäle ist ein elektromotorisch angetriebener Lüfter zugeordnet, der einen Luftstrom zu erzeugen in der Lage ist, wenn er elektrisch angesteuert wird.

Der Außenstreifen hat eine Ausströmöffnung des einen Kanals und eine Einströmöffnung des anderen Kanals. Demzufolge sind die Strömungskanäle dazu da, die Innenluft nach außen zu transportieren und die Außenluft nach innen zu transportieren, jeweils pro Kanal, ohne Umkehr der Drehrichtung der Lüfter.

Die Anordnung ist vorteilhaft, weil sich die Fenstergröße bei einem Ersatz des alten Fensters durch ein neues Fenster mit einem angedockten Lüftungsgerät nicht verkleinert. Fenster bleibt Fenster, seine Größe bleibt gleich und das Lüftungsgerät ist seitlich vom Fenster angeordnet (an einem der vertikalen Rahmen) und in das Mauerwerk der Laibung versenkt. Gleichwohl kann es günstig gewartet werden (ohne Ausbau des Gehäuses).

Die vorzunehmende Ausnehmung in der Wand erstreckt sich nicht längs der gesamten Höhe des Fensters, sondern nimmt einen geringen Teil in der Höhe ein und auf Grund der in Tiefenrichtung schlanken Gestalt des Lüftungsgeräts auch wenig Tiefe in die Laibung (in die Wand). Die Haupterstreckung des Lüftungsgeräts ist in Längsrichtung gegeben, also in einer Richtung parallel zur Montagefläche (der Flachseite) und dem darin oder darauf vorgesehenen Montagestreifen, der dem Rahmen zugeordnet ist (Anspruch 1). Das ist die Vertikalrichtung. Die Erstreckung in Querrichtung ergibt sich aus der Stärke des Fensters und den beiden weiteren Streifen, Außen und Innen. Es ist weniger als die Stärke der Mauer.

Dadurch, dass die Umlenkung der strömenden Luft außen erfolgt, geht die Strömung durch die Längsrichtung des Lüftungsgeräts hindurch und bleibt in dieser Ebene.

Der Begriff "außen" wird im Folgenden auch mit "Außenraum" benannt, und "innen" wird mit "Innenraum" benannt. Diese beiden sind relativ zu betrachten. Sie beziehen sich auf die Wand, in der das Fenster eingebaut ist. Es gibt eine Außenseite und es gibt eine Innenseite. Die Innenseite ist in der Regel die Raumseite. Der Außenraum soll auch so verstanden werden, dass er "weiter außen liegt" als der Innenraum. Beispielsweise kann es ein Innenhof sein oder ein Zwischenhof oder ein gestaffeltes Gebäude mit mehreren Wänden, sodass der hier als Außenraum benannte Ort nicht unmittelbar außerhalb des gesamten Gebäudekomplexes liegen muss, sondern nur "weiter außen" als der Innenraum. Ob das Atrium (der Innenhof) dabei überdacht ist und kein Regen ansteht, oder nicht überdacht ist, spielt für die Begriffe "innen" oder "außen" keine entscheidende Rolle.

Das Gerät kann aufgrund seiner mit Führungen versehenen Ausbildung im Inneren so langfristig zugänglich gehalten werden. Aufgrund der Ausbildung des Geräts ist die Platte, die als Abdeckung der Revisionsöffnung oder des Revisionszugangs vorgesehen ist, abnehmbar. Sie ist damit im eingebauten Zustand von Innen (von der Raumseite) zugänglich und eröffnet das Innere des Geräts zum Austausch der darin enthaltenen Kom ponenten, nicht nur zur Reparatur der Lüfter oder eventueller Elektronik, die diese Lüfter ansteuert, sondern auch zum Auswechseln des Wärmetauschers und zum Auswechseln vorhandener Filterplatten oder Filtereinsätze, die entlang der Strömungswege der Luft angeordnet sein können.

Der Innenstreifen steht zum Innenraum hin von dem Blendrahmen vor. Der Außenstreifen steht zum Außenraum von dem Blendrahmen vor (bezogen auf dessen Fensterebene).

Für die zwei Strömungswege in dem Lüftungsgerät ist je ein elektromotorisch betriebener Lüfter vorgesehen. Zunächst ist der Ort, an dem der jeweilige Lüfter im Zuge eines Strömungswegs angeordnet ist, beliebig. Er unterliegt allenfalls Wartungs- und Austauschüberlegungen, wo er günstig platziert werden kann, um Zugang zu einem solchen Lüfter zu haben. Eine bevorzugte Platzierung der Lüfter für beide Strömungswege ist dabei unterhalb des Innenstreifens, also unterhalb der abnehmbaren Platte, die den Revisionszugang öffnet, sodass Zugriff zu beiden Lüftern gegeben ist.

Beide Strömungswege sind eigenständig und verlaufen durch den im Wesentlichen zentral im Lüftungsgerät sitzenden Wärmetauscher. Hier ist bevorzugt ein Gegenstrom vorzusehen, sodass die Hauptorientierung des Wärmetauschers in Querrichtung zeigt, also eine größere Erstreckung in Querrichtung und eine kleinere Erstreckung des Wärmetauschers in (vertikaler) Längsrichtung.

Die vorteilhafte Zugänglichkeit über die abnehmbare Platte zur Öffnung der Revisionsöffnung kann dazu genutzt werden, alle einem Verschleiß oder einer Störung unterworfenen Komponenten auszutauschen, auszuwechseln oder für eine Reinigung zu entnehmen und wieder einzusetzen. Die die Lüfter steuernde elektronische oder elektrische Steuerung ist hier auch günstig anzuordnen, da sie herausgenommen werden muss, wenn technische Störungen in der Ansteuerung gegeben sind oder eine Sicherung angesprochen hat, die auszuwechseln ist.

Dies alles ist möglich, wenn die abnehmbare Platte geöffnet wird, obwohl das Lüftungsgerät mit seinem Gehäuse vollständig innerhalb der Wand liegt und in den Volumina unterhalb des Montagestreifens und unterhalb des äußeren Streifens nicht mehr senkrecht von der Flachseite her zugänglich ist.

Das eingebaute Gerät verhält sich mit der abnehmbaren Platte zur Öffnung der Revisionsöffnung unterhalb des Innenstreifens so, dass es trotz vollständig verdeckten Einbaus noch hinsichtlich sämtlicher, einem Austausch unterliegenden Komponenten zugänglich bleibt, so auch der elektrischen oder elektronischen Steuerung.

Auch der Wärmetauscher selbst ist, obwohl er praktisch im Zentrum des Lüftungsgeräts liegt, also zu einem wesentlichen Anteil unterhalb des Montagestreifens und des äußeren Streifens, durch ein seitliches Herausziehen und verkippendes (auch: "schwach verbiegendes") Herausnehmen zugänglich. Im eingesetzten Zustand ist er an drei im Gehäuse angeordneten Führungen geführt und gehalten; eine davon kann selbst entnehmbar sein, andererseits können zwei Führungen auf Flachseiten hinzutreten.

Auch die Filterplatten oder eingesetzte Filtereinsätze sind austauschbar. Einer dieser Filtereinsätze ist bevorzugt einem Lüfter benachbart angeordnet, ein anderer Filtereinsatz ist bevorzugt unter dem Außenstreifen angeordnet und nahe der die Luft aus dem Außenraum ansaugenden Strömungsöffnung. Er wird seitlich entlang einer in Querrichtung verlaufenden Führung unter dem Montagestreifen hindurch unter den äußeren Streifen geschoben. Ein Herausnehmen kann über ein angeflanschtes Bändchen geschehen, ein Hereinschieben unmittelbar mit der Hand oder einem Schubwerkzeug.

Bevorzugt sind beide Filter im oberen Bereich des Lüftungsgeräts angeordnet (montiert betrachtet), sodass sie in horizontaler Richtung eine Führung oder Bahn verwenden können. Daran ist die Führung angepasst.

Für die Lüfter kann gelten, dass eine Vertiefung im Boden vorgesehen ist, um die Lüfter in ihrer eingesetzten Position an zumindest drei Seiten zu halten. Auch für einen Filtereinsatz kann gelten, dass an zumindest drei Seiten im Sinne eines U ein eingesetzter Filtereinsatz in seiner betrieblichen Position gehalten wird, und zuvor entlang der Führung geführt wird, um diese betriebliche Position zu erreichen. Führungen können dabei Stege sein, und am Boden ein erhabener Streifen, so dass sich ein U-förmiger Steg auf der einen und anderen Seite eines Filtereinsatzes ergibt, zwischen denen oder zwischen die er eingeschoben wird. Der Steg am Boden ist dabei erhaben gegenüber seinem Umfeld, das der Boden sein kann, oder aber ein schon abgesenkter Bodenabschnitt, der eine Führung für eine benachbarte Komponente in ihrer betrieblichen Position bereitstellt, z. B. für einen Axiallüfter.

In einer konkreten Platzierung der austauschbaren Komponenten sind die beiden Filter im oberen Bereich jeweils einem eigenen Strömungskanal zugeordnet und die beiden Lüfter unter dem Innenstreifen auch jeweils einem eigenen Strömungskanal zugeordnet. Letztere sind dabei unter der abnehmbaren Platte angeordnet, aber nur einer der Filter ist ebenfalls unter dieser Platte angeordnet, der andere wird über den Schubkanal unter den Außenstreifen verschoben.

Als beanspruchtes Arbeitsverfahren ist der Arbeitsschritt umfasst, dass der Zugang (die Zugangsöffnung) im eingebauten Zustand des Lüftungsgeräts in der Laibung geöffnet wird. Das Öffnen geschieht durch Abnehmen der Platte. Zumindest eine der umschriebenen Komponenten wird entlang ihrer Führung herausgezogen und kann damit gewartet oder ausgetauscht werden.

Unter den Komponenten, die auf diese Art herausgenommen und gewartet oder ausgetauscht werden können, befinden sich zwei Lüfter, zwei Filtereinsätze, ein Netzteil und eine elektrische Steuerung auf einer Platine, welche die Lüfter ansteuert.

Auch ein Wärmetauscher gehört zu diesen Komponenten, der zentrales Teil des Lüftungsgeräts ist.

Zumindest einer der beiden Filtereinsätze kann über einen in Querrichtung sich erstreckenden Schubkanal an seinen Betriebsort geschoben werden. Dieser Filter muss nicht elektrisch angeschlossen werden, sodass keine Leitungszuführungen an diesem Filter mitverschoben werden müssen, er ist lediglich ein passives Bauteil, das eine solche Verschiebebewegung zu einem schwer zugänglichen Betriebsort ermöglicht. Vorteilhaft sind solche Komponenten, die elektrische Leitungen erfordern, näher zur Revisionsöffnung angeordnet, so das Netzteil, die Steuerplatine und die motorisch angetriebenen Lüfter.

Das Netzteil war zuvor mehrfach angesprochen worden. Es kann, wie die anderen Funktionskomponenten über die Revisionsöffnung nach Abnehmen der Abdeckplatte, die im Innenstreifen angeordnet ist, entnommen werden (Anspruch 1). Dabei liegt das Netzteil beispielsweise unter dem Montagestreifen, es kann aber auch unter dem Innenstreifen direkt liegen. Das Netzteil ist vorgesehen, um die Stromversorgung für die elektrische oder elektronische Steuerung zu liefern und ist zumeist über einen Anschluss von 220 Volt angeschlossen, betreibt aber die elektronische Steuerung auf einem Niederspannungspegel von 5 Volt, 12 Volt, 24 Volt oder 48 Volt, oder einer Kombination dieser Spannungen. Angesteuert werden die Lüfter, die abhängig vom Betriebszustand des Lüftergeräts eine unterschiedliche Drehzahl haben oder eingeschaltet oder abgeschaltet werden. Das Netzteil kann bevorzugt an einem Strömungskanal vorgesehen sein, entlang dem - betrieblich - eine Luftströmung vorgesehen ist. Diese Luftströmung ermöglicht es, im Netzteil entstehende Wärme mitzunehmen und abzuführen.

Das Netzteil kann unter dem Innenstreifen (Anspruch 1) auch so angeordnet werden, dass es nicht über die normale abnehmbare Platte und unter der Revisionsöffnung oder über die Revisionsöffnung zu erreichen angeordnet ist, sondern unter einer separaten Abdeckplatte, die von einem normalen Benutzer nicht geöffnet werden kann, sondern nur von Fachpersonal. Diese zusätzliche Sicherheit ist möglich, wenn entlang des Innenstreifens eine zweite Abdeckplatte vorgesehen ist und unter dieser Abdeckplatte das Netzteil platziert ist.

Das Anordnen an einem Strömungskanal kann auch die Mündung des Strömungskanals betreffen und hierbei eine der Lüftungsöffnungen, aber nicht diejenigen für den Außenbereich.

Ist das Netzteil an einer Lüftungsöffnung oder neben einer Lüftungsöffnung angeordnet, besteht eine thermische Kopplung zu einer Wand der Lüftungsöffnung, sodass die ausströmende oder einströmende Luft die entstehende Wärme des Netzteils mitnehmen kann. Die Wand wirkt als Kühlkörper für das Netzteil.

Bevorzugt wird dem Netzteil eine oben liegende Lüftungsöffnung zugeordnet, betrieblich gesehen ist das im Innenraum die oben liegende Lüftungsöffnung, die bevorzugt für das Absaugen der Innenluft des Rauminneren zuständig ist.

Eine direkte Kühlung ist dann möglich, wenn das Netzteil mit zumindest einem Abschnitt einer kühlenden Fläche, so eines Kühlkörpers, in den Strömungskanal reicht, oder in die Lüftungsöffnung hineinreicht. Ein solches Hineinreichen kann auch vermieden werden, wenn das Netzteil ganz außerhalb des Strömungskanals und/oder ganz außerhalb einer Lüftungsöffnung liegt, wobei diese Lüftungsöffnung diejenige ist, der das Netzteil zugeordnet ist, thermisch leitend betrachtet.

Mit der Positionierung des Netzteils, in dem durch die Spannungsumsetzung Wärme entsteht, die durch das Gehäuse des Lüftungsgerätes schlecht abgeführt werden kann, werden auf diese Weise zuverlässig zu hohe Temperaturen vermieden. Die Grenztemperaturen orientieren sich dabei an der zugelassenen Grenztemperatur des eingesetzten Netzteils, liegen aber jedenfalls unterhalb von 70 °C oder 80 °C mit Blick auf Innenkomponenten des Netzteils.

Wird die bevorzugte Variante des oben liegenden Netzteils gewählt, kann zuverlässig verhindert werden, dass angesaugtes Regenwasser das Netzteil mit seinem 220 V/230 V-Spannungspegel erreichen kann. Dazuhin bietet sich eine vereinfachte Demontage unter dem gesonderten Deckel an, als wenn das Netzteil der tiefer liegenden Lüftungsöffnung zugeordnet wäre, die für die Zuluft in das Rauminnere zuständig ist.

Die Erfindungen werden nachfolgend anhand von Ausführungs **beispielen** erläutert, wobei die Beispiele bitte als Beispiele verstanden werden, auch ohne dass vor jedem Begriff und vor jeder Aussage ein "vorzugsweise", "insbesondere", "zweckmäßig" oder "in bevorzugter Weiterbildung" angegeben ist.

Beispiele in den Figuren beziehen sich mit dem Bezugszeichen naturgemäß auf konkret zeichnerisch dargestellte Beispiele, können Offenbarungen auslösen, können aber die beanspruchte Erfindung, die als solches von den Ansprüchen zum Schutz definiert ist, nicht einschränken.

Eine dritte Anmerkung ist aktuell veranlasst, "notwendige Merkmale" ergeben sich sicherlich nicht aus der folgenden Beschreibung, sinnvolle Ergänzungen oder brauchbare Offenbarungen, im Kontext einer jeweiligen Aussage eines Absatzes, ja, aber dass diese Beispiele in einer gewissen Weise "notwendig zur Festlegung der Erfindung" wären, sagt die folgende, konkrete Figurenbeschreibung nicht.

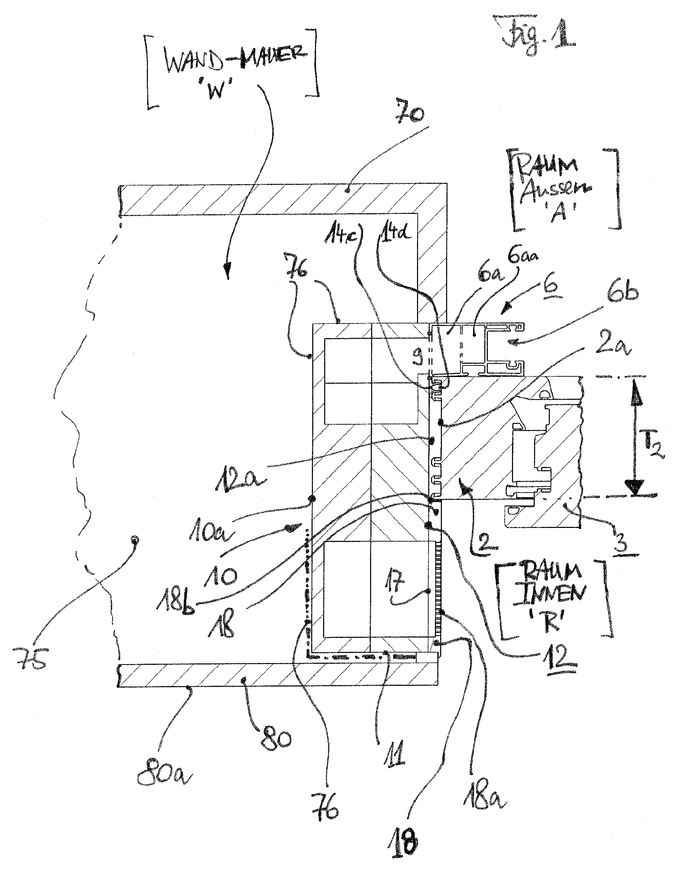

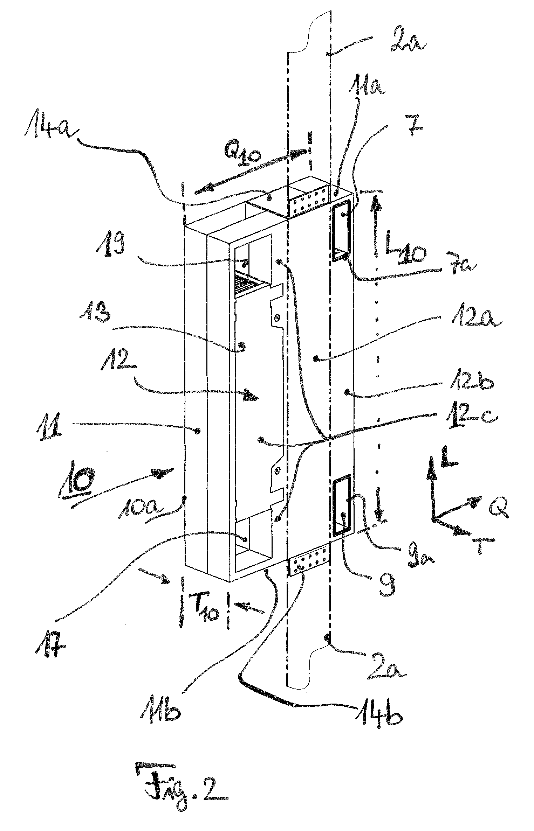

**Figur 1** veranschaulicht - im Vorgriff auf Figur 2 - einen Schnitt horizontaler Richtung, bei der das Lüftungsgerät 10 mit zwei Strömungs-Öffnungen 9,17 (Luftauslässen) zu sehen ist, eingebaut neben dem Blendrahmen 2 eines Fensters mit Blendrahmen (Festrahmen 2) und bewegbarem Flügel 3. Der Flügel kann ein Drehflügel, ein Kippflügel, ein Schiebeflügel oder ein Schwenkflügel sein, wenngleich für dieses Beispiel eine vertikale Hohlprofil-Geometrie 6 außen eingezeichnet ist, die einen nicht dargestellten Rollladen auf der Außenseite führt, die zum Außenraum A führt. Der Innenraum ist R benannt und bezieht sich auf ein Zimmer oder einen Raum innerhalb eines Gebäudes, dessen Wand 75 gezeigt ist. Die Mauer 75 ist außenseitig von einer Fassade 70 kaschiert oder bedeckt, innenseitig von einer Wandabdeckung 80. Andere Varianten werden an den folgenden Figuren erläutert. Diese erste Aussage zur Figur 1 ist für einen groben Überblick.
**Figur 2** zeigt das Lüftungsgerät 10 in einer perspektivischen Ansicht und zeigt den vertikalen Streifen 2a des Festrahmens 2, an dem das Lüftungsgerät 10 seitlich angesetzt ist. Montagehilfen sind gezeigt, mit denen das Lüftungsgerät 10 an der schmalen, seitwärts weisenden Stirnfläche 2a des Blendrahmens 2 (dessen vertikalem Holm) angedockt ist.

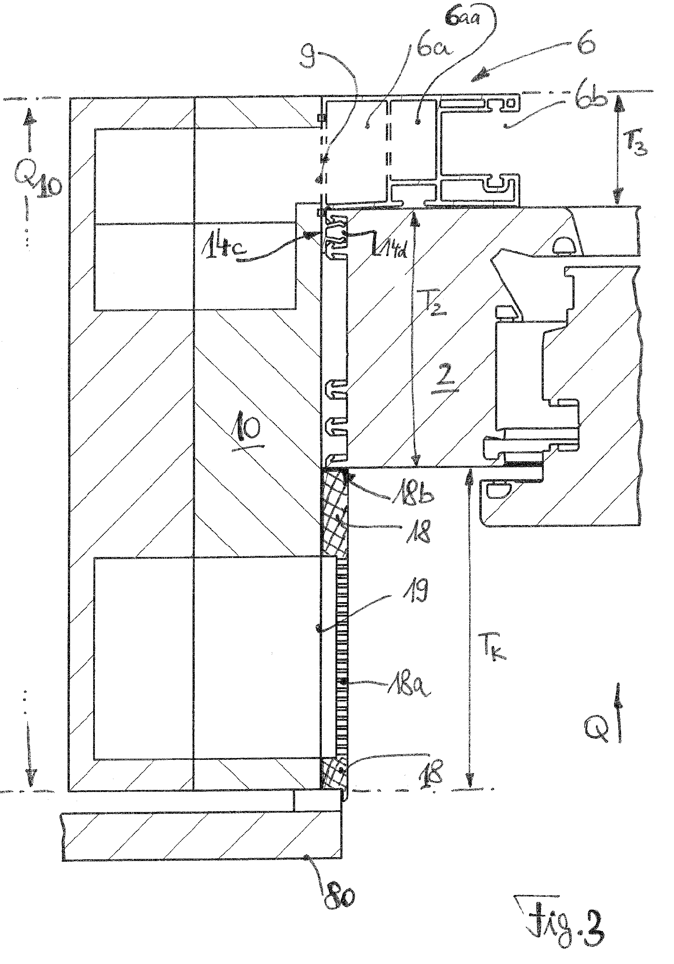

**Figur 3** entspricht der Figur 1 und sämtliche dort gezeigte Bezugszeichen können hierauf übertragen werden. Mit der Figur 3 wird die Abdeckplatte 18 und ihre Funktion näher erläutert, sodass nur Bezugszeichen in diesem Bereich eingetragen sind, um die Übersichtlichkeit zu erhalten.

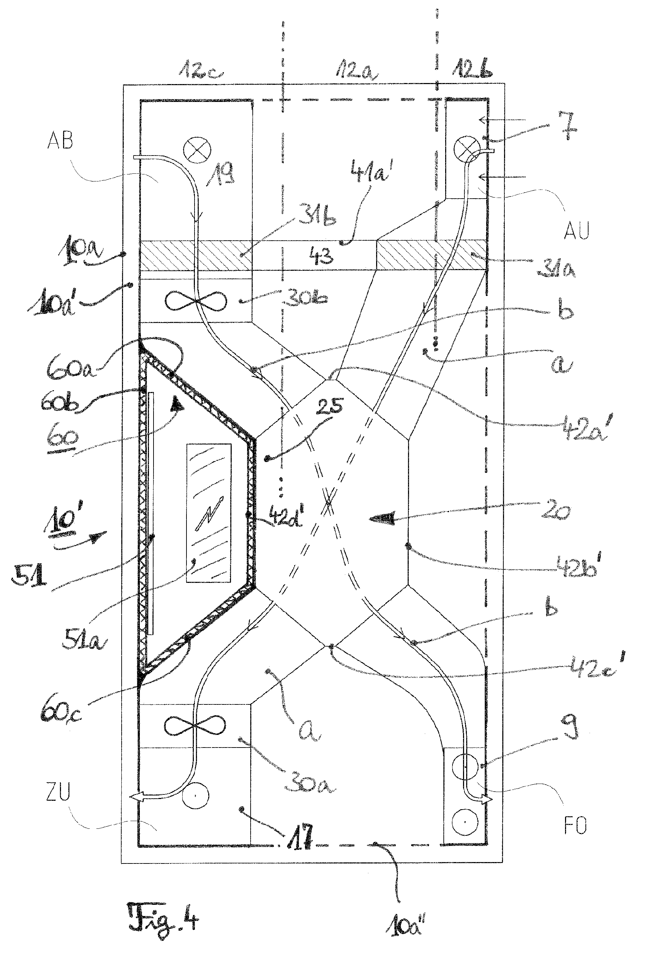

**Figur 4** verdeutlicht eine Aufsicht auf ein (ganz) geöffnetes Lüftungsgerät 10'. Es sind die zwei Strömungswege a und b der Luft zu sehen, wie auch der Innen, im Wesentlichen im Zentrum liegende Wärmetauscher 20. Zur Koordinierung mit der Figur 2 sind die beiden Austrittsöffnungen auf der Außenseite oder für den Außenraum mit 7 und 9 benannt (rechts im Bild der Figur 4).

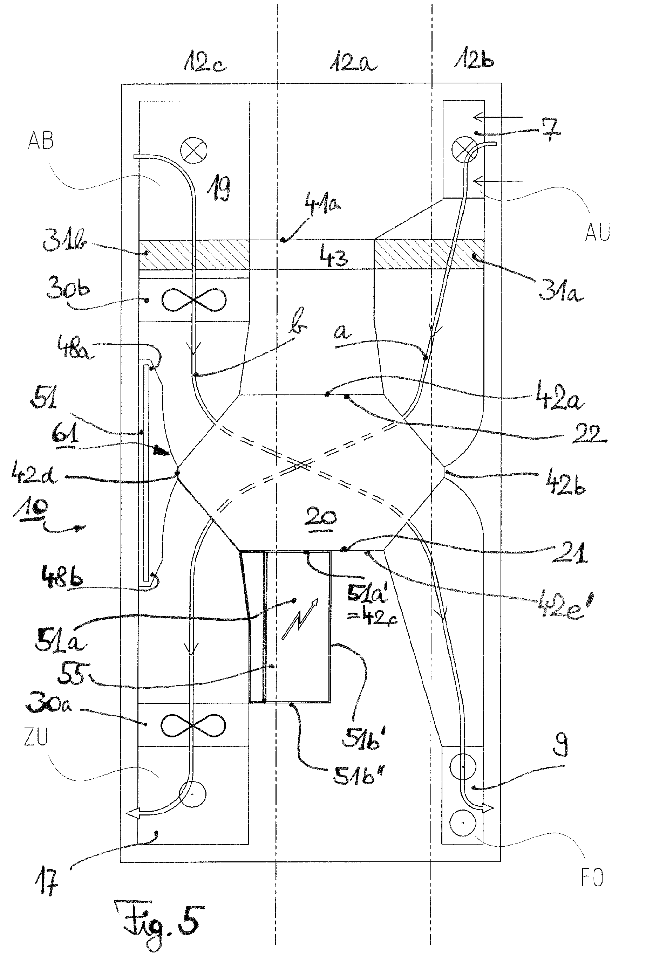

**Figur 5** ist eine alternative Gestaltung eines Lüftungsgeräts 10, bei dem beide Strömungswege a, b im Wärmetauscher 20 im Gegenstrom geführt sind. Es sind Führungen 42a, 42b zu erkennen, die den Wärmetauscher 20 beim Einsetzen zum Platzieren an seiner zentralen Lage führen und im eingesetzten Zustand dort halten.
**Figur 6** ist eine noch alternative Gestaltung eines Lüftungsgeräts 10".
**Figur 7** ist ein Ausschnitt aus der Figur 8 (links oben, Filter 31b und Öffnung 19 für die Abluft AB).
**Figur 8** ist eine perspektivische Darstellung eines geöffneten Lüftungsgeräts 10, welches demjenigen der Figur 5 entspricht. Es sind nur wenige innere Komponenten eingesetzt, hier zwei Filtereinsätze 31b und 31a, wobei je ein Filter in je einem Strömungsweg a, b angeordnet ist. Dazu sind Führungen vorgesehen, wie auch für die elektrisch betriebenen Lüfter, die mit 30a und 30b aus den Figuren 4 und 5 in Figur 6 zu platzieren sind, nur sind hier ihre Aufnahmen 40b, 40a als offene Vertiefungen mit lateralen Führungen gezeigt, um jeden Lüfter austauschbar zu machen: Einerseits einsetzen zu können und am Ort des Einsatzes platziert zu halten, und beim Herausnehmen auch zu führen und damit die elektrischen Komponenten austauschbar zu gestalten (revisionierbar). Dies betrifft die Wartungs- und Servicefreundlichkeit des Lüftungsgeräts als wesentliche Aspekte, die bei einem elektrisch betriebenen Gerät mit Komponenten, die im Betrieb verschmutzen, abnutzen oder verbrauchen, unbedingt von Vorteil sind.

Ein grobes Konzept zum Verständnis der Einbaulage ist bereits bei der Übersicht der Figuren vermittelt worden. Hierzu ist bestmöglich die Figur 2 und die Figur 1 gemeinsam zu betrachten. Figur 1 ist ein Schnitt durch die Figur 2 auf der Höhe des unteren Auslasses als Strömungsöffnung 9, die auf der Außenseite (für den Außenraum A) ankommt und dort in das Hohlprofil 6 führt, welches in Figur 1 ersichtlich ist. Auf der Raum-Innenseite, also dem Raum R ist die gegenüberliegende Öffnung 17 zu sehen, die aber nicht im gleichen Strömungskanal liegt. Die beiden Strömungskanäle verbinden vielmehr die obere äußere Öffnung 7 mit der inneren unteren Öffnung 17 und die untere äußere Öffnung 9 mit der inneren, oberen Öffnung 19.

Ein Blick auf mögliche Platzierungen der beiden Strömungskanäle a, b mag hier angezeigt sein. Sie finden sich in den Figuren 4 und 5 für zwei Varianten 10,10' des Lüftungsgeräts. Beide dieser Varianten können in Figur 1 und 2 als dargestellt angesehen werden, da sie nach außen hin vergleichbar sind (außerhalb ihres jeweiligen Gehäuses 10a).

Die Einbaulage der Figur 2 zeigt, dass das Rahmen-Lüftungsgerät 10 mit seiner Längserstreckung L nach oben am vertikalen Abschnitt des Festrahmens platziert ist. Es wird dort "angedockt", was bedeutet, dass es in einem Streifenbereich 12a der großen Flachseite 12 an ein vertikales Stück der lateralen Stirnseite 2a des vertikalen Abschnitts des Blendrahmens 2 angefügt wird.

Dazu wird in das Mauerwerk 75, das außenseitig mit einer Fassade 70 verkleidet ist und innenseitig mit einer Wandfläche 80 verdeckt ist, eine Öffnung 76 geschlagen. Diese Öffnung 76 gibt Raum für die Einbringung des Lüftungsgeräts 10 oder 10' mit seinem Gehäuse 10a, das angedockt an dem Blendrahmen 2 die Strömungen an ihm vorbei leitet.

Der Blendrahmen 2 wird dadurch nicht durchbrochen, es werden keine seiner Hohlkanäle bei Kunststoff oder Metallprofilen verwendet. Es ist indes ebenso möglich, Holzprofile zu verwenden und eine Lüftung an dem Holzprofil des Fensters innerhalb des Mauerwerks 75, das im Weiteren auch als Laibung benannt wird, vorbeizuführen. Das dazu verwendete Andocken benennt, dass ein laterales Anlegen oder ein Anfügen gegeben ist. Es kann ein mechanischen Verklemmen durch Rastnasen und Rastnuten 14c, 14d angewendet werden, oder es kann eine zusätzliche Verschraubung stattfinden, die bestmöglich mit zwei Winkeln, oben und unten vorgenommen wird, die an die kurzen Stirnflächen 11a, 11b des Lüftungsgeräts 10 angesetzt werden und an der lateralen Stirnseite 2a des Festrahmen angeschraubt werden. Schraub- oder Montageöffnungen sind in Figur 2 zu sehen, der Blendrahmen selbst nicht, nur sein Streifenbereich 2a, der die laterale Stirnseite darstellt.

Mit dem Andocken werden schlimmstenfalls nur Montagestellen in die laterale Stirnfläche des Festrahmens 2 eingebracht und wenn eine mechanische Verklemmung 14c,14d Anwendung findet, findet keine Verletzung statt, jedenfalls aber ist kein funktionstragendes Stück oder kein funktionstragender Abschnitt des Lüftungsgeräts 10 seitlich in den Blendrahmen eingelassen, um einen Teil von diesem oder seinem Raum einzunehmen.

Dadurch gewinnt das seitlich angedockte Lüftungsgerät an großer Versatilität für eine Vielzahl von Anwendungsbereichen. Es ist unabhängig von der Bauart des Fensters, namentlich des Festrahmens 2 und des Flügelrahmens 3. Es ist verdeckt eingebaut, weil es in die Laibung eingesetzt wird, und es ist leistungsfähig, weil es groß genug gebaut werden kann, die notwendigen Komponenten für einen energiebewussten Wärmetausch aufzunehmen.

Die Erstreckungen in Längsrichtung L, in Querrichtung Q und in Tiefenrichtung T, die in Figur 2 als Koordinatensysteme eingezeichnet sind, verhalten sich so, dass das Gerät eine große Länge L₁₀ besitzt, die sich in Höhenrichtung erstreckt. Es ist noch immer die Erstreckung in Höhenrichtung gering, relativ zur Höhe des Blendrahmens. In Querrichtung ist die Größe Q₁₀ des Geräts so definiert, das sie ein Stück nach außen über den Blendrahmen 2 hinausreicht und ein deutliches Stück auch nach innen über den Blendrahmen 2 hineinreicht. Der Blendrahmen ist in Figur 1 etwa mittig mit Blick auf die Laibung 75 gesetzt, bezogen auf die Querrichtung Q. In Tiefenrichtung T ist das Gerät 10 mit dem Maß T₁₀ als 'flach' zu benennen.

Die Erstreckung in Längsrichtung L ist bei dem Lüftungsgerät 10 am größten, verglichen mit den anderen Erstreckungsrichtungen in Q und T-Richtung.

Erläutert werden soll an Figur 2 die Flachseite 12, dies ist die Montageseite die zur Andockung führt, aber nicht das ganze Gerät, wie zuvor erläutert, wird an der Seite angedockt, vielmehr nur ein Streifenbereich 12a. Dieser Streifenabschnitt ist ein Abschnitt von zumindest drei Abschnitten, die auf der Flachseite 12 vorhanden sind.

Ein erster Streifen dient der Montage. Der Montagestreifen 12a hat notwendig die Breite (in Q-Richtung), die der Blendrahmen 2 in derselben Erstreckungsrichtung aufweist. Diese Richtung wird bei Blendrahmen der Flügel oft Tiefenrichtung genannt, die hier an anderer Stelle aufgegriffen werden soll. Es ist hier die Querrichtung, mit Blick auf das hauptsächlich beschriebene Lüftungsgerät 10.

Die Montage erfolgt entweder mit Winkeln 14a, 14b aus Figur 2 ersichtlich, oder mit Klemmstücken, die als 14c, 14d und weitere in Figur 1 ersichtlich sind. Sie "montieren" oder halten das Lüftungsgerät 10 beim Anliegen am Streifen 2a an dem Festrahmen 2. Die zusätzliche mechanische Befestigung kann mit den Winkeln 14a, 14b hinzutreten, oder die mechanische Verklemmung 14c, 14d fällt weg und es wird ausschließlich mit den Winkeln 14a, 14b montiert.

Hier sind alle beschriebenen Kombinationsmöglichkeiten und auch Individualmöglichkeiten für das Andocken möglich, bis hin zu einem bloßen Anliegen der beiden Streifenbereiche 12a, 2a.

Beidseitig dieses ersten Montagestreifens 12a sind zwei weitere Streifenbereiche 12b, 12c vorgesehen. Einer ist der äußere Streifenbereich 12b, in dem beide Außen-Strömungsöffnungen 9 und 7 gelegen sind. Diese sind räumlich beabstandet.

Im dargestellten Beispiel ist ganz oben eine Einströmöffnung 7 zu sehen und ganz unten eine Ausströmöffnung 9. Beide gehören nicht zum selben Strömungsweg, sondern bilden den Anfang bzw. das Ende jeweils eines eigenständigen Strömungswegs a bzw. b.

Der weiter innen liegende Streifen 12c ist im Beispiel der Rest der Flachseite 12. Er weist zumindest eine abnehmbare Platte 13 auf. Die Platte verdeckt, deshalb in Figur 2 nicht zu sehen, eine Öffnung, die als Revisionszugang zur Verfügung steht.

Bei abgenommener Platte 13 hat der Benutzer die Möglichkeit, das Innenleben des Lüftungsgeräts zu inspizieren und Teile oder Komponenten daraus herauszunehmen, Neue hereinzusetzen, oder herausgenommene Teile oder Komponenten zu reinigen und wieder einzusetzen. Auch funktionelle Schäden an der Elektronik oder den Lüftern können repariert werden. Der Revisionszugang ermöglicht generell die Wartung.

Der Deckel der Platte 13 sorgt für die Möglichkeit, dass ein Revisionszugang jedenfalls von der Raumseite R her möglich ist und das Gerät im Übrigen gänzlich verdeckt eingebaut ist. Es steht an keiner weiteren Stelle hervor, auch nicht beim Revisionszugang über den Deckel 13, der zusätzlich mit einer Abdeckung 18 (= Abdeckplatte) verdeckt ist, die in Figur 1 zu sehen ist und die anhand der Figur 3 näher erläutert wird.

Diese funktionelle Abdeckung 18 ist zuvor abzunehmen. Dann kann der erste Deckel 13 die Revisionsöffnung öffnen und die Wartung kann erfolgen.

Ein Ausgleich (oder: Kompensation) mit der Abdeckung 18 soll anhand der Figur 3 erläutert werden.

Das Gerät selbst hat in Querrichtung Q eine bestimmt Erstreckung. Diese soll Q₁₀ genannt werden. Das Fenster mit seinem Blendrahmen 2 hat auch eine gewisse Erstreckung in dieser Q-Richtung, die hier Tiefe genannt wird. Diese Erstreckung ist im Beispiel T₂. Das Rollladenprofil, das als Hohlprofil 6 den zumindest einen vertikalen Kanal 6a (oder auch 6aa) aufweist und auch einen offenen Kanal 6b, der das Rollladenprofil (nicht eingezeichnet) führt, ist an der Außenseite des Blendrahmens 2 angesetzt, definiert also die äußere Randfläche, an der sich die Lage des Lüftungsgeräts 10 orientiert. Das ist die Oberkante oder die obere Fläche (in Tiefenrichtung des Blattes betrachtet in der Figur 2a). Von hier ausgehend bleibt ein Rest in der Querrichtung Q bestehen, der mit Tₖ benannt ist. Dieser Rest wird vom Gerät 10 mit Q₁₀ definiert, als verbleibender Rest aus der Q-Erstreckung des Profils 6, hier mit T₃ angegeben und hinzugefügt der Tiefe T₂ des Blendrahmens 2.

Der sichtseitige Deckel 18 wird auf diesen Rest Tₖ zugeschnitten, sodass er den "überstehenden Rest" und zwar den nach innen überstehenden Restabschnittes des Lüftungsgeräts 10 in Vertikalrichtung (und auch in Q-Richtung) abzudecken vermag. Dazu stößt der vordere Rand 18b des Deckels 18 an dem Blendrahmen 2 an.

Der Deckel kann dazu in verschiedener Breite zugeschnitten werden, so gemessen in Q-Richtung, wenn sich die Aufbauweise ändert, also entweder der Blendrahmen 2 zwischen seinen zugelassenen Maßen von 50mm bis 100mm sich verändert, oder aber das Rollladenprofil eine veränderte Tiefe T₃ besitzt. Es ergibt sich in jedem Fall ein veränderter Wert für Tₖ.

Das Gerät 10 ist aber jeweils als gleich mit Q₁₀ anzunehmen, sodass die Abmessung in Q-Richtung des Geräts 10 mit Q₁₀ unverändert bleibt, nicht aber Tₖ.

Ein in der Breite (in Querrichtung Q betrachtet) zugeschnittener Deckel 18 ermöglicht die Kompensation, für viele verschiedene Anwendungsbereiche, ohne dass das Gerät 10 selbst angepasst werden muss.

In dem Deckel 18 ist zur Abdeckung der oberen Lüftungsöffnung 19 ein Lüftungsgitter 18a eingesetzt, das den Strömungsweg für ein Durchströmen öffnet, nicht aber für ein Hineinsehen öffnet.

Nachdem auf der Flachseite 12 auch zur Raumseite R hin zwei Lüftungsöffnungen 17 und 19 vorhanden sind, ist der die Revisionsöffnung verschließende Deckel 13 in Längsrichtung L verkürzt.

Nachdem zwei Öffnungen vorhanden sind, ist er um zweimal die Größe der Öffnung in L-Richtung verkürzt gegenüber der Länge L₁₀ des Geräts in L-Richtung.

Die Öffnungen 17, 19 müssen aber nicht auf dieser Flachseite liegen, es können eine oder beide dieser Öffnungen auf der langen Stirnseite 11 gelegen sein, die auch zum Raum R hin operativ verwendet werden kann.

Das ist in der Figur 1 nicht vorgesehen, aber bei anderem Einbau des Geräts nach Figur 2 ebenso möglich. Die Wand 80 ist dann verkürzt, oder aber das Gerät ist so eingebaut, dass es mit seiner langen Stirnseite 11 bis auf die Oberfläche 80a der Innenwand 80 reicht.

Die umschriebenen (vertikalen) Streifen 12a, 12b und 12c sind funktionell adaptiert, haben also nicht nur eine organisatorische oder logische Bedeutung. Ein Streifen ist für die Montage funktionell adaptiert, der äußere Streifen ist für die Strömungsöffnungen (zum Außenraum und vom Außenraum) funktionell adaptiert und der Innenstreifen ist zumindest für den Revisionszugang adaptiert, kann aber zusätzlich auch für die Lüftungsöffnung zum und vom Innenraum R funktionell adaptiert sein.

Daher werden die Streifen 12a bis 12c auch "Funktionsstreifen" genannt.

In den Figuren ist das Innenleben unter den Streifen bei ganz geöffnetem Lüftungsgerät zu sehen. Normal ist im Einbauzustand nur der Bereich des geöffneten Deckels 13 aus Figur 2 im Funktionsstreifen 12c zugänglich. Durch und über diese freigelegte Öffnung (ohne Bezugszeichen) hat die Wartung zu erfolgen. Das betrifft zumindest einige, bevorzugt alle betrieblichen Komponenten.

Figur 4 zeigt eine erste Ausführungsform eines (ganz) geöffneten Lüftungsgeräts 10', wobei der Wärmetauscher 20 im Zentrum eines Gehäuses 10a so eingebaut ist, dass er für einen Parallelstrom-Betrieb vorbereitet ist. Für ein Gegenstrom-Prinzip ist die Anordnung des Wärmetauschers 20 in der anderen Ausführungsform der Figur 5 vorgesehen. Das Lüftungsgerät 10 hat abgewandelte Strömungskanäle a, b, die konkret ein wenig anders verlaufen, die aber funktionell auch zwei eigenständige Strömungskanäle sind, die alle zum Wärmetauscher führen, und dort ihren Luftstrom auf verschiedene Lagen oder Ebenen des Wärmetauschers verteilen, so dass sie eigenständig bleiben.

Eingezeichnet in beiden Varianten ist die Lage der drei Funktionsstreifen 12a (Montagestreifen), 12b (Außenstreifen) und 12c (Innenstreifen). Der Deckel 13, der aus Figur 2 ersichtlich ist, liegt in der Mitte des Innenstreifens, zwischen den beiden Lüftungsöffnungen 19 und 17, ist also gegenüber der Länge L₁₀ verkürzt. Der Deckel 13 ist in Figuren 4, 5 nicht eingezeichnet, aber aus Figur 2 dorthin übertragbar, mit der Relativanordnung der Streifen 12c, 12a.

Im eingebauten Zustand jedes der Geräte 10' und 10 ist nicht alles zu ersehen, was durch vollständige Öffnung der Frontseite (Flachseite 12) bildlich dargestellt ist. Es ist nur das unmittelbar und direkt sichtbar, was unter der abgenommenen Platte 13 zur Freilegung der Revisionsöffnung sichtbar ist. Deshalb mag die "abnehmbare Platte" mit ihrer Funktion auch "Revisionsplatte" genannt werden. Auch "Abnehmen" ist eine schwenkende Abnahme, bei der die Revisionsöffnung auch freigelegt wird. Ebenso eine schiebende Abnahme mit Freilegen der Öffnung.

Für das Beispiel der Figur 4 ist das eine vertikal eingeschobene Platine 51, das Netzteil 51a, eine herausnehmbare Tasche 60, die trapezartig ausgestaltet ist und oben und unten mit zwei schräg gestellten Wänden die linken Äste der Luftführungen definiert. Sie stößt stirnseitig an den Wärmetauscher 20 an und ist über die Revisionsöffnung zugänglich und herausnehmbar.

Sichtbar ist auch der Filtereinsatz 31b, der in Strömungsrichtung danach angeordnete Lüfter 30b und unten im anderen Strömungskanal a der Lüfter 30a. Dies alles bei abgenommener Platte 13.

Der Wärmetauscher 20 ist ersichtlich nur in einem vorderen Abschnitt unmittelbar zu ergreifen, der Großteil des Wärmetauschers liegt unter dem Montagestreifen 12a. Dieser ist eingebaut neben dem Blendrahmen und nicht unmittelbar zugänglich, sondern nur dadurch zugänglich, dass der Benutzer an dem sichtbaren, direkt zugänglichen Abschnitt des Wärmetauschers 20, durch die Revisionsöffnung greifend anzufassen vermag, nachdem die Tasche 60 herausgenommen worden ist.

Anders geometrisch gestaltet ist das Beispiel der Figur 5. Hier ist der Wärmetauscher mit seiner Haupt-Erstreckungsrichtung in Querrichtung Qvorgesehen. Zu den drei Richtungen L, Q und T wird auf das Koordinatensystem der Figur 2 verwiesen.

Ebenfalls in Figur 5 anders platziert als in Figur 4 ist das Netzteil 51a. Es ist in eine Tasche 51b eingeschoben, die im Bild unterhalb des Wärmetauschers 20 liegt. Die obere Wand des Netzteils 51a, dort mit 51a' benannt, bildet eine Führung 42c für eine Seite 21 des sechseckigen Wärmetauschers 20.

Im Gegenstrom-Prinzip und im Gegenstrom-Einbau sind die längeren Führungen 42a, 42c oben und unten und zwei kurze Führungen als Anschläge 42d und 42b links und rechts. Sie sind strömungsdicht, weil an ihnen beide Strömungskanäle a und b mit ihren Armen angrenzen, die hier in den Wärmetauscher münden.

Generell gesprochen, sind die Strömungskanäle a, b in beiden Ausführungen 10, 10' X-förmig, haben vier Arme (oder: Äste), aber funktionell sind es zwei eigenständige Strömungskanäle, die sich im Wärmetauscher 20 treffen. Die konkrete Bahnführung ist an das Tauscherprinzip angepasst, was deutlich aus den beiden Varianten der Figuren 4, 5 hervorgeht. Außerhalb des Wärmetauschers ergibt sich mit den vier Ästen der Strömungskanäle a, b zum und vom Wärmetauscher 20 bei dem Gegenstrom-Prinzip eine stärkere Krümmung.

Die von außen einströmende Luft AU wird vom Lüfter 30a durch den Wärmetauscher 20 angesaugt, und der Lüftungsöffnung 17 als ZU zugeführt. Im äußeren Arm zwischen Wärmetauscher 20 und äußerer Einströmöffnung 7 ist ein weiterer Filter als Filterplatte 31a vorgesehen.

Der andere Strömungskanal b nimmt Innenluft AB aus dem Innenraum durch die Lüftungsöffnung 19 auf, diese wird erst über den ersten Filter 31b geführt, angesaugt von dem zugehörigen Axiallüfter 30b. Von diesem Arm des Strömungskanals ausgehend wird der Wärmetauscher 20 mit der strömenden Luft beaufschlagt, die am gegenüberliegenden unteren, rechten Arm austritt und der Strömungsöffnung 9 zugeführt wird, welche die Fortluft FO in den Außenraum abgibt.

Die Positionierung der verschiedenen betrieblichen Komponenten, die hier erläutert worden sind, soweit sie im Innenraum des Gehäuses 10a platziert werden und für die Funktionen des Lüftungsgeräts gebraucht werden, wird in den folgenden Figuren, auch unter Zuhilfenahme der Figuren 4 und 5 erläutert, jeweils für eine austauschbare Komponente eigenständig.

Alle beliebigen Kombinationen der beschriebenen Komponenten mit ihren zugehörigen Führungen sind möglich und sollen als eigene Ausführungsbeispiele angesehen werden, wenngleich sie hier an einer einzigen bildlichen Darstellung der Figur 8, unter Zuhilfenahme der Ausschnittsvergrößerung der Figur 7 und mit Blick auf die ganz geöffneten Geräte der Figur 4 oder 5 erläutert werden.

Die zentrale Komponente ist der Wärmetauscher 20. Er hat vier kürzere Seiten und zwei längere Seiten. Die vier kürzeren Seiten sind von gestapelten Platten, die strukturiert sind, ausgebildet und definieren mehrere Ebenen, durch die wechselweise Luft aus dem Strömungskanal a und Luft aus dem Strömungskanal b strömt. Im Parallelstromverfahren, wenn die beiden Strömungsrichtungen nahezu parallel in Längsrichtung des Tauschers verlaufen, vgl. Figur 4, oder im Gegenstromverfahren, wenn diese Strömungsrichtungen praktisch gegenläufig in Tauscher-Längsrichtung verlaufen, vgl. Figur 5. Die Pfeile zeigen die Richtung der Luftströmung in beiden Figuren und die strichlinierten Wege zeigen, wie die Luft funktionell durch den Wärmetauscher geführt wird.

Die beiden längeren Seiten des Tauschers 20 sind nicht geöffnet und dienen der Führung und der Platzierung, wie auch dem Anschlag im eingebauten Zustand.

Besonders aus Figur 8 ist eine obere Führungswand 42a ersichtlich, die oben liegt und für das Ausführungsbeispiel der Figur 5 zählt. Die lange, nicht durchlässige Seite 22 des Wärmetauschers wird an dieser Wand 42a entlang eingeschoben. Figur 8 ist dazu im eingebauten Zustand zu betrachten, und der Montagestreifen, also der Beginn des vertikal unzugänglichen Orts, liegt über der Wand 42a, die vertikal verläuft.

Die Einschubbewegung endet am vorderen Anschlag 42b, der auch in Figur 8 ersichtlich ist. Dieser Anschlag schließt im eingebauten Zustand des Wärmetauschers 20 strömungsdicht mit diesem ab, sodass die beiden rechten Arme der Strömungswege a und b nicht am Wärmetauscher vorbei kommunizieren können, sondern die Luft zwingend und eigenständig für jeden Strömungskanal durch den Wärmetauscher 20 geleitet wird. Das gilt ebenso für die längere Anschlagwand 42b' aus Figur 4.

Ist das Netzteil 51a in der Tasche 51b eingeschoben (auch unter dem Montagestreifen 12a), kann in einem Beispiel seine obere Wand 51a' als weitere Führung 42c für die andere lange (geschlossene) Stirnseite 21 des Wärmetauschers 20 dienen. Die Wand 42a und die eine Wand 51a' des Netzteils dienen der Führung des Wärmetauschers beim Einschieben, und im eingesetzten Zustand schlägt der Wärmetauscher strömungsdicht am vorderen Anschlag 42b an.

In einem anderen Beispiel dient das zum Wärmetauscher 20 weisende innere Wandstück 42e' als Anlage und zur Führung eines Abschnitts der langen (geschlossenen) Stirnseite 21 des Wärmetauschers 20, wie es auch mit dem etwas kürzeren Wandabschnitts 42e" in Figur 8 zusehen ist, gegenüber der oberen Führungswand 42a.

Nach einem Platzieren des Wärmetauschers 20 wird eine Tasche 61 eingesetzt, welche die zweite strömungsdichte Anbindung 42d ermöglicht, die auch eine mechanische Fixierung des Wärmetauschers 20 in seiner eingeschobenen, betrieblichen Lage begründet. Zu dieser Tasche 61 wird später etwas ausgeführt, in Verbindung mit der vertikal eingesteckten oder eingeschobenen Platine 51 für die Elektronik.

Eine Besonderheit bei dem Wärmetauscher 20 ist dadurch gegeben, dass die Revisionsöffnung im Innenstreifen 12c zu schmal ist, um den Wärmetauscher in der Lage herauszuholen, in der er betrieblich nach Figur 5 oder 6 eingesetzt ist.

Ein solches Herausholen ist nur bei der Einbaulage nach Figur 4 möglich, wenn die dortige Tasche 60 mit dem Netzteil 51a und der die elektrischen Komponenten zur Steuerung der Lüfter aufweisenden Platine 51 herausgenommen wird. Die längste Wand 60b der Tasche 60 liegt an der linken Wand 10a' des Gehäuses 10a an. Parallel zu dieser Wand 60b liegt die Platine 51.

Durch das Herausnehmen der Tasche 60 werden die eingezeichneten Wände 60a, 60c oben und unten mit der Tasche 60 herausgenommen, welche die Strömungsbahnen a, b in diesen beiden Ästen begrenzen, und der Wärmetauscher 20 kann unter dem Montagestreifen 12a herausgezogen werden, und durch eine leichte Aufwärts-Kippung (oder: Biegung im Bereich der Eigenelastizität) aus der schmalen Öffnung, die von der Platte 13 freigelegt wurde, herausgenommen werden. Der "Tauscher" 20 wird dabei an dem Abschnitt 25 angefasst, der links von dem Streifen 12a zur Revisionsöffnung freiliegt.

Bei dieser Ausbildung der Figur 4 waren die langen Seiten an der vorderen Anschlagkante 42b' und die Platzierung des Wärmetauschers in seiner gesicherten, betrieblichen Position durch die vordere Wand 42d' der eingesetzten Tasche 60 gegeben. Die strömungsdichten Führungen oben und unten sind hier stark verkürzt als 42a' und 42c' dargestellt, sie haben die gleiche Führungsaufgabe, wie die längeren Abschnitte 42a und 42c in Figur 5.

Nicht dargestellt, aber leicht vorstellbar sind die flächigen Führungen oberhalb und unterhalb von den Flachseiten des Wärmetauschers 20, die unterhalb des Montagestreifens 12a und vom Boden 46 des Gehäuses 10a erfolgen.

Andere, nicht dargestellte Ausführungen haben für die Wand 42a eine geringere Höhe als die Innenhöhe des Gehäuses 10a. Es ist lediglich darauf zu achten, dass die Strömungsöffnungen des Wärmetauschers am vorderen und hinteren Ende der Wand 42a strömungsdicht sind, damit die Strömungskanäle a und b keinen direkten Strömungskurzschluss erfahren.

Das Einschieben des Netzteils 51a erfolgt in die unter dem Montagestreifen 12a liegende Tasche 51b. Sie hat einen hinteren Anschlag 51b' und eine seitliche Führung 51b".

Ist das Netzteil 51a berührend an diesen beiden Führungen anliegend, kann in einem Beispiel die nach oben weisende Wand 51a' des Netzteils als Führung für das Einschieben des Wärmetauschers 20 dienen, um ihn in seine betriebliche Lage zu schieben.

In einem weiteren Beispiel führt das innere Wandstück 42e' die Stirnseite 21 des Wärmetauschers. Diese Führung bleibt auch dann bestehen, wenn das Netzteil entnommen ist.

Vor dem Herausnehmen des Wärmetauschers wird das Netzteil 51a herausgezogen. Der Abschnitt 55, der über die Öffnung (nach Abnehmen der Platte 13) greifbar ist, reicht aus, dass das Netzteil aus der Tasche 51b herausgezogen und über die Öffnung herausgenommen werden kann. Eine der Führungen des Wärmetauschers 20 fällt im ersten Beispiel dann weg. Im zweiten Beispiel bleibt die Wand 42e' als Führung erhalten.

Wenn danach auch die nahezu dreieckförmige Tasche 61 herausgenommen wird, in welche die Steuerplatine 51 eingesteckt ist, fällt eine weitere Führung 42d fort, was die Drehbewegung des Wärmetauschers 20 ermöglicht.

Die Platine 51 steckt in Führungen 48a, 48b, die als Steckführung ausgebildet sind und von der Tasche 61 oben und unten für ihre linke Flachseite definiert wird. Die Platine 51 ist damit unmittelbar und direkt ergreifbar, wenn die Platte 13 (Revisionsplatte) abgenommen ist.

Eine weitere Führung zur mechanischen Fixierung findet sich für jeden der Axiallüfter 30a, 30b und eine noch weitere Führung findet sich für jede der eingesetzten Filterplatten 31a, 31b.

Diese können in der Übersicht aus den Figuren 4 und 5 entnommen werden, sind aber besonders für die Filtereinsätze aus der Figur 8 und ihrer Ausschnittsvergrößerung der Figur 7 zu ersehen. In einem Strömungskanal b, zwischen der Lüftungsöffnung 19 und dem Wärmetauscher (im linken oberen Ast oder Arm des Strömungswegs) findet sich eine Führung für den vertikal einzusetzenden Filter 31b.

Die Ausschnittvergrößerung zeigt, dass diese Führung aus einem vorstehenden Steg 41b links und einem vorstehenden Steg 41b' rechts des Strömungskanals b gebildet wird. Ein entsprechender Vorsprung ist auf der Rückseite des eingesetzt eingezeichneten Filtereinsatzes 31b vorhanden, der in Figur 7 verdeckt ist. Am Boden ist ein erhabener Steg 40c vorgesehen, der mit den beiden Stegen 41b und 41b' ein U-förmiges Profil bildet, das Führungs- und Haltefunktion besitzt. Auf der gegenüberliegenden Seite ist es entsprechend ausgebildet.

Ersichtlich daraus ist, dass der Filtereinsatz 31b vertikal herausgezogen und hereingesetzt werden kann, unmittelbar durch die Revisionsöffnung, wenn die Platte 13 abgenommen ist. Im eingesetzten Zustand sitzt der Filter 31b zuverlässig und genau zwischen den U-förmigen Stegen auf beiden Seiten der Filterplatte 31b. Dazu ist der Abstand der U-Stege so gewählt, dass die Filterplatte genau dazwischen passt.

Der weitere Filter 31a, der wie in Figur 8 dargestellt im anderen Strömungsweg platziert ist, wird über einen Kanal 43 dorthin verschoben. Dies ist ein Querkanal, der die eine vertikale Wand 41a' aufweist, beginnend an der vorderen Ecke 41b". Bildlich vorstellbar ist das durch Verschieben des in Figur 7 eingesetzten Filtereinsatzes 31b, der nach recht über den Kanal 43 verschoben wird und am Ende seiner Verschiebebewegung den Platz einnimmt, den der Filtereinsatz 31a in Figur 8 einnimmt. Dies ist unter dem Außenstreifen und in Strömungsrichtung nach der Einlass-Strömungsöffnung 7 und stromauf vor dem Wärmetauscher 20, der in Figur 8 nicht eingesetzt ist.

Ist der Filter 31a an seinen Platz verschoben, kann der zweite Filter 31b an die Stelle eingesetzt werden, die in Figur 7 in der Ausschnittsvergrößerung gezeigt ist und in Figur 8 mit beiden eingesetzten Filtern veranschaulicht wird.

Die Schiebebewegung 47 ist für das Einsetzen des Filtereinsatzes 31a nach rechts gerichtet, und für das Herausnehmen an einem beispielsweise angesetzten Bändchen am Filter 31a in einer Verschieberichtung nach links zu sehen, nachdem der erste Filter 31b bereits herausgenommen wurde.

Ersichtlich ist, dass der Schubkanal 43 sich in Querrichtung erstreckt. Er befindet sich unter dem Montagestreifen 12a, beginnend unter dem Innenstreifen 12c. Er mündet sinngemäß in der gesamten Führung 41b, 41b', die zum Einsetzen der Filterplatte dient, und dann zum Weiterschieben der Filterplatte längs des Kanals 43.

Der Führungskanal 43 endet unter dem Außenstreifen, in einer ähnlichen Führung 41a, wie sie auch die Führung 41b' in Figur 7 darstellt. Diese ist dann mehr als Anschlag oder Aufnahme zu sehen, um den Filtereinsatz 31a an seiner betrieblichen Lage der Figur 8 zu platzieren und zu halten.

Ebenso wie die Lüftungsöffnung 19 am Anfang des Strömungskanals b, ist die Einströmöffnung 7 der Beginn des Strömungskanals a.

Mit anderen Worten kann auch gesagt werden, dass die Führung 41b für den linken Filtereinsatz 31b der Führung 41a des rechten Filtereinsatzes 31a entspricht. Verbunden sind die beiden Führungen über den Querkanal 43.

Für die Steuerplatine 51 sind zwei verschiedene Fixierungen vorgesehen, beides sind Steckfixierungen. Eine sitzt im Gehäuse 10a in der Tasche 61 nach Figur 5 und eine sitzt in der herausnehmbaren Tasche 60 nach Figur 4. Dort ist auch das Netzteil angeordnet, das bei Figur 5 in die gesonderte Tasche 51b (unter dem Montagestreifen 12a) eingeschoben ist.

Es ist zu vermerken, dass die Luft führenden Wände der Strömungskanäle links vom Wärmetauscher 20 entweder mit derTasche 60 oder mit derTasche 61 herausgenommen werden. Dadurch wird der Wärmetauscher 20 beweglich. Die Wände sind insoweit geneigt oder gekrümmt, um der Strömungsführung für die Luft Rechnung zu tragen.

Die Platzierungen der Lüfter in ihrer jeweiligen Führung ist an der Ausschnittsvergrößerung mit der unten liegenden Vertiefung 40b in dem Boden 46 gut zu erkennen.

Im Gehäuse 10a sind zwei Führungen 40b" und 40b"', um einen jeweiligen Lüfter an diesen beiden Wandabschnitten geführt in Richtung des nach unten zeigenden Pfeils 45 in die Vertiefung 40b einzusetzen. Die schmale Wand 40b', die sich von der Vertiefung ausgehend nach oben zum Boden 46 ergibt, gibt seitlichen Halt und Stabilität auf der einen Seite, auf der anderen Seite ist der Steg 40c, der ebenfalls gegenüber der Vertiefung 40b erhaben ist, ebenfalls eine Führung, die im eingesetzten Zustand dem Axiallüfter 30b Halt vermittelt.

Die Entnahmebewegung in vertikaler Richtung (↑ von ↕ 45) geschieht umgekehrt.

Der zweite Lüfter 30a wird in eine entsprechende Vertiefung 40a eingesetzt, die nur in Figur 8, nicht aber in der Ausschnittsvergrößerung der Figur 7 zu ersehen ist. Dort ist der Aufbau für diese Vertiefung 40a gleich, nur ist hier kein Filtereinsatz unmittelbar neben dem Axiallüfter vorgesehen, dieser vielmehr am anderen Ende dieses Strömungspfads a als 31a in Figur 8 ersichtlich eingesetzt.

Die beiden Lüfter 30a, 30b sind, da sie elektrisch an die Steuerungsplatine 51 angeschlossen sind, dieser möglichst nahe und sind in den beiden linken Ästen oder Armen der Strömungskanäle a und b angeordnet und von dortigen Führungen austauschbar gehalten. Sie können dabei direkt senkrecht herausgezogen werden und hereingeschoben werden. Sie sind unmittelbar ergreifbar, da sie unter der abgenommenen Platte 13 liegend aus der Revisionsöffnung herausgenommen werden können.

Obwohl der Innenstreifen 12c in der besonderen Ausführung der breiteste von allen drei Funktionsstreifen ist, ist der abnehmbare Deckel 13 in seiner Breite nicht so groß, dass eine Öffnung frei liegen kann, durch die der Wärmetauscher ohne eine Aufwärts-Verkippbewegung um seine längere Mittelachse herausgenommen werden kann. Die Revisionsöffnung ist in der Breite als kleiner, als das kleinste Quermaß des Wärmetauschers 20, entlang einer von seinen beiden Mittelebenen. Dennoch gelingt das Herausnehmen aller Komponenten und die Möglichmachung der Wartung sämtlicher betrieblicher Komponenten im eingebauten Zustand des Lüftungsgeräts.

Ist der Rahmen, an den das Lüftungsgerät 10 oder 10' angeordnet werden soll, etwas breiter, kann der Montagestreifen 12a und der Innenstreifen 12c in etwa die gleiche Breite erreichen. Der Montagestreifen 12a wird dabei breiter als bei dem in Fig. 2 dargestellten Gerät, so wie es das Beispiel der Fig. 5 zeigt. Am schmälsten von den drei Funktionsstreifen ist der Außenstreifen, dessen Strömungsöffnungen auch in Längsrichtung (Höhenrichtung) des Lüftungsgeräts 10 länger ausgebildet sind, als in Querrichtung, also rechteckig erscheinen, gegenüber den nahezu quadratisch erscheinenden Lüftungsöffnungen 17 und 19 des Geräts 10 von Fig. 2 und des Geräts 10' von Fig. 4.

Eine noch andere Form der Strömungsöffnungen 17, 19 im Innenstreifen 12c, ebenfalls rechteckig, aber um 9D° gegenüber den Strömungsöffnungen 7 und 9 des Außenbereichs gedreht, veranschaulicht das weitere Ausführungsbeispiel 10" der Fig. 6.

Im Beispiel der Fig. 6 ist eine Verlagerung des Netzteils 51a erfolgt, das jetzt nahe der Einströmöffnung 19 für die Abluft aus dem Innenraum platziert ist. Das dortige Netzteil 51a ist oberhalb der Einströmungsöffnung vorgesehen (mit Blick auf die Einbaulager mit Blick auf das Bild der Fig. 6). Es ist dabei an die obere Wand montiert, welche die Strömungsöffnung 19 von oben her begrenzt und ist hier thermisch leitend fixiert, mit einem metallischen Bauteil, beispielsweise einem Kühlkörper oder einem Kühlwinkel, der die Wärme aus dem Netzteil 51a durch Ableitung auf die strömende Luft AB in der Strömungsöffnung 19 überträgt.

Das Netzteil 51a ragt hierbei nicht in die Strömungsöffnung 19 hinein und auch nicht in die sich an die Strömungsöffnung anschließende Kanalstruktur b, entlang der die geführte Luft dem Wärmetauscher 20 zugeführt wird.

Der Platz, der zuvor das Netzteil 51a in der Fig. 5 aufnahm, ist leer geblieben und es verbleibt eine stehende vertikale Wand 42e, die gegenüberliegend der anderen langen Wand 42a platziert ist und einen Abstand aufweist, sodass der Wärmetauscher 20 seitlich (in Querrichtung, im Bild der Fig. 6 von links nach rechts) eingeschoben werden kann, bis hin zum vorderen Anschlag 42b, der wiederum ein Wandstück des Gehäuses ist. In entsprechender Weise ist dies in Fig. 8 bereits erläutert, dort sind die drei Wandstücke 42a, 42e" und 42b zu sehen, die denjenigen von Fig. 6 entsprechen.

Das Lüftungsgerät 10" von Fig. 6 hat im Übrigen die vergleichbaren Komponenten aus dem Gerät von Fig. 5 oder Fig. 4, nur mit einem anders platzierten Netzteil 51a.

In weiteren, nicht dargestellten Beispielen kann dieses Netzteil 51a auch entlang eines anderen Strömungskanals angeordnet werden, so dem Strömungskanal a, mit einer leichten Verschiebung des Netzteils aus Fig. 5 nach links, um dort an eine Wand des Strömungskanals b thermisch leitend angebracht zu werden. Ebenso ist die Montage nahe der Strömungsöffnung 17 in Fig. 6 möglich, wobei das Netzteil auch in die Strömungsöffnung mit einem Abschnitt eines metallischen Kühlkörperteils ragen kann. Die Zuluft ZU wird hierbei zusätzlich durch die abgegebene Wärme aus dem Netzteil erwärmt.

Aufgrund der etwas nach unten verlagerten Position der Strömungsöffnung 19 in Fig. 6 gegenüber derjenigen von Fig. 5 und auch der Verkürzung in Höhenrichtung, also der Ausbildung als liegendes Rechteck der Öffnungen 17, 19 gegenüber den vertikal orientierten Rechtecken der Strömungsöffnungen 7, 9, ist die Struktur der anderen Komponenten in Fig. 6 etwas nach unten verlegt und etwas gedrängter, was an der stärkeren Quererstreckung des Gehäuses 62a, 62b der elektrischen Schaltung 51 seine deutlichste Ausprägung findet. Die hier vorgesehene Tasche 62 ist mit den beschriebenen gekrümmten Wänden 62a, 62b versehen, die die Strömungskanäle a und b strömungstechnisch trennen und auch an der Anlagestelle 42d strömungstechnisch im eingesetzten Zustand getrennt halten. Es bildet sich die Tasche 62 aus und nach Einsetzten ebenso die gegenüberliegenden Strömungskanäle. Die Lüfter 30a, 30b sind ebenso platziert, in einer vertikalen Führung, wie die Wärmetauscher 31a, 31b, die aus Fig. 5 übernommen sind.

Zu erwähnen wäre eine gesonderte, nicht dargestellte Form der Abdeckung des Netzteils 51a in Figur 6, das nicht unter einer abnehmbaren Platte 13 entsprechend Figur 2 gelegen ist, sondern eine eigene Abdeckung erhält, die gesondert abnehmbar ist und schwieriger zu demontieren ist, als die normale Revisionsklappe 13. Damit kann das Netzteil bei 220 V Eingangsspannung gegenüber Fremdzugriff geschützt werden. Die Platzierung an der oberen Seite bringt dazuhin die Gewährleistung, dass kein eventuell angesaugtes Regenwasser oder anderweitige Feuchte über die Kanäle a oder b das Netzteil der hohen Nennspannung erreichen kann.

Soweit Komponenten oder andere Bauelemente oder Führungen nicht gesondert zu Figur 6 erläutert sind, können sie aus den vorhergehenden Erläuterungen entsprechend übernommen werden.

## Patentansprüche

1. Lüftungsgerät für ein Andocken an einen Rahmen (2) eines Fensters oder einer Tür, ohne in den Rahmen einzugreifen, das Lüftungsgerät (10) mit einem Gehäuse (10a) und
- mit in dem Gehäuse (10a) ausgebildeten zwei Strömungskanälen (a, b), welche beide durch einen Wärmetauscher (20) verlaufen und jeder Strömungskanal im Zuge seiner Längserstreckung einen Lüfter (30a, 30b) aufweist;
- mit einer Flachseite (12) des Gehäuses (10a), die drei funktionelle Streifenabschnitte aufweist, wobei der erste Streifenabschnitt (12a) als Montagestreifen für eine seitliche Stirnfläche (2a) des Festrahmens (2) vorgesehen und dazu ausgebildet ist, der zweite Funktionsstreifen (12b) als Außenstreifen zwei räumlich beabstandete Strömungsöffnungen (7, 9) aufweist und der dritte Funktionsstreifen (12c) als Innenstreifen ausgebildet ist;
**dadurch gekennzeichnet, dass** im dritten Funktionsstreifen (12c) eine abnehmbare Platte (13) als Abdeckung einer Revisionsöffnung vorgesehen ist, um Zugriff auf zumindest die Lüfter (30a, 30b) und einen Abschnitt des Wärmetauschers (20) zu geben.

2. Lüftungsgerät nach Anspruch 1, wobei einer der Lüfter (30b) in einer lateralen Führung (40b',40b") für ein Herausziehen und ein Hereinschieben (45) gehalten ist und die Schubbewegung (45) senkrecht zur Flachseite (12) ausgerichtet ist.

3. Lüftungsgerät nach Anspruch 1 oder 2, wobei zumindest der eine Lüfter (30b) in eine Vertiefung (40b) einschiebbar ist, die in einem Boden (46) des Gehäuses (10a) eingebracht ist.

4. Lüftungsgerät nach einem der vorigen Ansprüche, wobei die Lüfter (30a,30b) beide Axiallüfter sind.

5. Lüftungsgerät nach einem der vorigen Ansprüche, wobei drei im Gehäuse (10a) angeordnete Führungen (42a,42b,42c;42a',42b',42c') für den Wärmetauscher (20) vorgesehen sind, um den Wärmetauscher (20) bei einer Entnahmebewegung oder bei einer Einsetzbewegung seitlich zu führen und stirnseitig anschlagen zu lassen, und der Wärmetauscher (20) im eingesetzten Zustand bereichsweise unter dem Montagestreifen (12a) liegt.

6. Lüftungsgerät nach einem der vorigen Ansprüche, wobei eine weitere, vertikal ausgerichtete Führung (41b,41b',41b") senkrecht zur Flachseite (12) vorgesehen ist, für eine Aufnahme und Führung eines Filtereinsatzes (31 b), und die weitere Führung in einem Anfangsbereich des ersten Strömungskanals (b) platziert ist.

7. Lüftungsgerät nach einem der vorigen Ansprüche, wobei beide Lüfter (30a,30b) unter der abnehmbaren Platte (13) angeordnet sind und unter dem funktionellen Innenstreifen (12c).

8. Lüftungsgerät nach einem der vorigen Ansprüche, wobei eine elektronische oder elektrische Steuerung (51) außerhalb der Strömungswege (a,b), aber unter der abnehmbaren Platte (13) im Innenstreifen (12c) angeordnet ist.

9. Lüftungsgerät nach einem der vorigen Ansprüche, wobei entlang des Innenstreifens (12c) zumindest eine oder zwei Lüftungsöffnungen (17,19) angeordnet sind.

10. Lüftungsgerät nach einem der vorigen Ansprüche, wobei in einem Randbereich eines Innenraums des Gehäuses (10a) ein vertikal verlaufender Spalt als Steckführung (48a,48b) ausgebildet ist, zum Einführen und Halten einer vertikal einschiebbaren Platine (51), insbesondere innerhalb einer in das Gehäuse einsetzbaren und daraus entnehmbaren Tasche (61).

11. Lüftungsgerät nach einem der vorigen Ansprüche, wobei ein Netzteil (51 a) in eine Tasche (51 b) eingeschoben ist, die unter dem Montagestreifen (12a) gelegen ist, oder eine Tasche (51 b) unter den Montagestreifen (12a) angeordnet ist, die zum abnehmbaren Deckel (13) hin geöffnet ist, zur Aufnahme des Netzteils (51 a) bei einer gleichzeitigen Führung an zumindest zwei vertikalen Wandabschnitten (51 b', 51 b") der Tasche (51 b).

12. Lüftungsgerät nach einem der vorigen Ansprüche, wobei ein Netzteil (51a) vorgesehen ist, welches für eine Stromversorgung einer elektrischen oder elektronischen Steuerung (51) vorgesehen ist und dazu elektrisch verschaltet ist.

13. Lüftungsgerät nach Anspruch 12, wobei das Netzteil (51 a) in oder an einem Strömungskanal (a,b) im Gehäuse (10a) angeordnet ist.

14. Lüftungsgerät nach Anspruch 12 oder 13, wobei das Netzteil unter dem Innenstreifen (12c) angeordnet ist.

15. Lüftungsgerät nach Anspruch 14, wobei das Netzteil (51 a) an oder neben einer Lüftungsöffnung montiert ist, die im Betrieb oben liegt, insbesondere nahe oder an der Lüftungsöffnung (19) zum Absaugen von Luft (AB) aus dem Rauminnern.

## Claims

1. A ventilation device for docking to a frame (2) of a window or a door, without engaging in the frame, the ventilation device (10) comprising a housing (10a) and
- having two flow channels (a, b) which are formed in the housing (10a) and which both extend through a heat exchanger (20), and each flow channel comprises a fan (30a, 30b) in the course of its longitudinal extension;
- a flat side (12) of the housing (10a) which comprises three functional strip sections, wherein the first strip section (12a) is provided and formed as a mounting strip for a lateral face end (2a) of the fixed frame (2), the second functional strip (12b) comprises two spatially spaced flow openings (7, 9) as the outer strip, and the third functional strip (12c) is formed as an inner strip;
**characterized in that**
a removable plate (13) is provided as a cover of a maintenance opening in the third functional strip (12c) in order to provide access to at least the fans (30a, 30b) and a section of the heat exchanger (20).

2. A ventilation device according to claim 1, wherein one of the fans (30b) is retained in a lateral guide (40b', 40b") for extraction and insertion (45), and the pushing movement (45) is oriented perpendicularly to the flat side (12).

3. A ventilation device according to claim 1 or 2, wherein at least the one fan (30b) can be pushed into a depression (40b) which is incorporated in a bottom (46) of the housing (10a).

4. A ventilation device according to one of the preceding claims, wherein the fans (30a, 30b) are both axial fans.

5. A ventilation device according to one of the preceding claims, wherein three guides (42a, 42b, 42c; 42a', 42b', 42c') arranged in the housing (10a) are provided for the heat exchanger (20) in order to laterally guide the heat exchanger (20) during its extraction movement or insertion movement and to allow it to abut at the face end, and the heat exchanger (20) lies in some sections beneath the mounting strip (12a) in the inserted state.

6. A ventilation device according to one of the preceding claims, wherein a further, vertically oriented guide (41 b, 41 b', 41 b") is provided perpendicularly to the flat side (12), for receiving and guiding a filter insert (31 b), and the further guide is positioned in an initial region of the first flow channel (b).

7. A ventilation device according to one of the preceding claims, wherein both fans (30a, 30b) are arranged beneath the removable plate (13) and beneath the functional inner strip (12c).

8. A ventilation device according to one of the preceding claims, wherein an electronic or electrical controller (51) is arranged outside of the flow paths (a, b), but beneath the removable plate (13) in the inner strip (12c).

9. A ventilation device according to one of the preceding claims, wherein at least one or two ventilation openings (17, 19) are arranged along the inner strip (12c).

10. A ventilation device according to one of the preceding claims, wherein a vertically extending gap is formed as an insert guide (48a, 48b) in a peripheral region of an interior space of the housing (1 Oa), for the purpose of inserting and holding a vertically insertable circuit board (51), especially within a pocket (61) which can be inserted into the housing and removed therefrom.

11. A ventilation device according to one of the preceding claims, wherein a power supply unit (51 a) is inserted into a pocket (51 b) which is situated beneath the mounting strip (12a), or a pocket (51 b) is arranged beneath the mounting strip (12a) which is open towards the removable cover (13) for the purpose of accommodating the power supply unit (51 a) with simultaneous guidance on at least two vertical wall sections (51 b', 51 b") of the pocket (51 b).

12. A ventilation device according to one of the preceding claims, wherein a power supply unit (51 a) is provided, which is provided for the power supply of an electrical or electronic controller (51) and is electrically wired for this purpose.

13. A ventilation device according to claim 12, wherein the power supply unit (51 a) is arranged in or on a flow channel (a, b) in the housing (10a).

14. A ventilation device according to claim 12 or 13, wherein the power supply unit is arranged beneath the inner strip (12c).

15. A ventilation device according to claim 14, wherein the power supply unit (51 a) is mounted on or adjacent to a ventilation opening which is situated at the top in operation, especially close to or on the ventilation opening (19) for the extraction of air (AB) by suction from the interior of the room.

## Revendications

1. Appareil de ventilation à accrocher à un châssis (2) d'une fenêtre ou d'une porte sans empiéter dans le châssis, l'appareil de ventilation (10) possédant un boîtier (10a) et
- deux canaux de circulation (a, b) formés dans le boîtier (10a) qui passent tous les deux à travers un échangeur de chaleur (20), chaque canal de circulation présentant un ventilateur (30a, 30b) sur son étendue longitudinale ;
- avec un côté plat (12) du boîtier (10a), qui présente trois parties en bandes fonctionnelles, la première partie en bande (12a) semant de bande de montage pour une face d'extrémité latérale (2a) du dormant (2) et étant conformée pour cela, la deuxième bande fonctionnelle (12b) semant de bande extérieure et présentant deux ouvertures de circulation d'air (7, 9) écartées l'une de l'autre et la troisième bande fonctionnelle (12c) étant conçue comme une bande intérieure,
**caractérisé en ce qu'**il est prévu dans la troisième bande fonctionnelle (12c) une plaque amovible (13) couvrant une ouverture de visite et donnant accès au moins aux ventilateurs (30a, 30b) et à une partie de l'échangeur de chaleur (20).

2. Appareil de ventilation selon la revendication 1, dans lequel un des ventilateurs (30b) est retenu dans un guide latéral (40b', 40b") en vue de son extraction et de son insertion en poussée (45) et le mouvement de poussée (45) est orienté perpendiculairement au côté plat (12).

3. Appareil de ventilation selon la revendication 1 ou 2, dans lequel au moins un ventilateur (30b) peut être inséré dans un renfoncement (40b) formé dans un fond (46) du boîtier (10a).

4. Appareil de ventilation selon l'une des revendications précédentes, dans lequel les ventilateurs (30a, 30b) sont tous les deux des ventilateurs axiaux.

5. Appareil de ventilation selon l'une des revendications précédentes, dans lequel trois guides (42a, 42b, 42c ; 42a', 42b', 42c') sont prévus dans le boîtier (10a) pour l'échangeur de chaleur (20), afin de guider l'échangeur de chaleur (20) latéralement lors d'un mouvement de retrait ou d'un mouvement d'insertion en poussée et de le faire buter sur sa face d'extrémité, et l'échangeur de chaleur (20) inséré se trouve en partie sous la bande de montage (12a).

6. Appareil de ventilation selon l'une des revendications précédentes, dans lequel un autre guide orienté verticalement (41b, 41b', 41b") est prévu perpendiculairement au côté plat (12) pour recevoir et guider un insert de filtre (31b), et cet autre guide est placé dans une zone de début du premier canal de circulation (b).

7. Appareil de ventilation selon l'une des revendications précédentes, dans lequel les deux ventilateurs (30a, 30b) sont disposés sous la plaque amovible (13) et sous la bande fonctionnelle intérieure (12c).

8. Appareil de ventilation selon l'une des revendications précédentes, dans lequel une commande électronique ou électrique (51) est disposée dans la bande intérieure (12c) en dehors des trajets de circulation (a, b) mais sous la plaque amovible (13).

9. Appareil de ventilation selon l'une des revendications précédentes, dans lequel au moins une ou deux ouvertures de ventilation (17, 19) sont disposées le long de la bande intérieure (12c).

10. Appareil de ventilation selon l'une des revendications précédentes, dans lequel une fente verticale est formée dans une zone de bord d'un espace intérieur du boîtier (10a) afin de servir de guide d'enfichage (48a, 48b) pour l'introduction et le maintien d'une carte de circuits (51) pouvant être insérée verticalement, en particulier à l'intérieur d'une poche (61) qui peut être insérée dans le boîtier et en être retirée.

11. Appareil de ventilation selon l'une des revendications précédentes, dans lequel un bloc secteur (51a) est inséré dans une poche (51b) qui se trouve sous la bande de montage (12a), ou bien une poche (51b) ouverte en direction du couvercle (13) amovible est disposée sous la bande de montage (12a) pour recevoir le bloc secteur (51a) en le guidant en même temps sur au moins deux parties de paroi verticales (51b', 51b") de la poche (51b).

12. Appareil de ventilation selon l'une des revendications précédentes, dans lequel est prévu un bloc secteur (51a) destiné à l'alimentation électrique d'une commande électrique ou électronique (51) et monté électriquement pour cela.

13. Appareil de ventilation selon la revendication 12, dans lequel le bloc secteur (51a) est disposé dans ou sur un canal de circulation (a, b) dans le boîtier (10a).

14. Appareil de ventilation selon la revendication 12 ou 13, dans lequel le bloc secteur est disposé sous la bande intérieure (12c).

15. Appareil de ventilation selon la revendication 14, dans lequel le bloc secteur (51a) est monté sur ou à côté d'une ouverture de ventilation qui se trouve sur le dessus en service, en particulier sur ou près de l'ouverture de ventilation (19) pour l'aspiration d'air (AB) à partir de l'intérieur de la pièce.
